(19) **Europäisches Patentamt**
**European Patent Office**
**Office européen des brevets**

(11) **EP 4 492 878 A1**

(12) **EUROPEAN PATENT APPLICATION**
published in accordance with Art. 153(4) EPC

(43) Date of publication:
**15.01.2025 Bulletin 2025/03**

(21) Application number: **23765979.2**

(22) Date of filing: **07.03.2023**

(51) International Patent Classification (IPC):
***H04W 56/00*** (2009.01)

(52) Cooperative Patent Classification (CPC):
**H04W 56/00**

(86) International application number:
**PCT/CN2023/080017**

(87) International publication number:
**WO 2023/169401 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2022 CN 202210216683
27.04.2022 CN 202210454137**

(71) Applicant: **Datang Mobile Communications
Equipment Co., Ltd.
Beijing 100085 (CN)**

(72) Inventors:
• **LUO, Yajuan
Beijing 100085 (CN)**
• **GAO, Qiubin
Beijing 100085 (CN)**
• **LI, Hui
Beijing 100085 (CN)**
• **SONG, Lei
Beijing 100085 (CN)**
• **SU, Xin
Beijing 100085 (CN)**
• **HUANG, Qiuping
Beijing 100085 (CN)**

(74) Representative: **Studio Torta S.p.A.
Via Viotti, 9
10121 Torino (IT)**

(54) **INFORMATION PROCESSING METHOD AND APPARATUS AND READABLE STORAGE MEDIUM**

(57)     Provided are information processing method and apparatus, which relates to the field of communication technology. The method includes: receiving, by an terminal, first indication information transmitted by a network device, wherein the first indication information is used to indicate TAs corresponding to at least two TRPs, and determining, by the terminal, TAs corresponding to at least two target TRPs according to the first indication information; or, determining, by the terminal, TAs corresponding to at least two target TRPs according to a predefined rule, wherein different target TRPs correspond to different TAs.

```
            ┌───────────┐
            │   Start   │
            └─────┬─────┘
                  │
                  ▼
┌──────────────────────────────────────────────┐
│ Receiving, by a terminal, indication          │  ── 301
│ information transmitted by a network          │
│ device, wherein the indication information is  │
│ used to indicate TAs corresponding to at       │
│ least two TRPs; determining, by the terminal,  │
│ TAs corresponding to at least two target TRPs  │
│ according to the indication information; or,    │
│ determining, by the terminal, TAs              │
│ corresponding to at least two target TRPs      │
│ according to a predefined rule                 │
└──────────────────────┬───────────────────────┘
                       │
                       ▼
            ┌───────────┐
            │    End    │
            └───────────┘
```

FIG. 3

EP 4 492 878 A1

**Description**

**CROSS-REFERENCE TO RELATED APPLICATIONS**

This application claims priority to Chinese Patent Application No. 202210216683.9 filed in China on March 7, 2022, and Chinese Patent Application No. 202210454137.9 filed in China on April 27, 2022, the entire contents of which are incorporated herein by reference.

**TECHNICAL FIELD**

The present disclosure relates to the field of communication technology, in particular to an information processing method and an information processing apparatus, and a readable storage medium.

**BACKGROUND**

In a multi-TRP (multi Transmission and Reception Point) scenario, a terminal only maintains one TA (Timing Advance), that is, the terminal only uses one TA to adjust uplink transmissions to different TRPs.

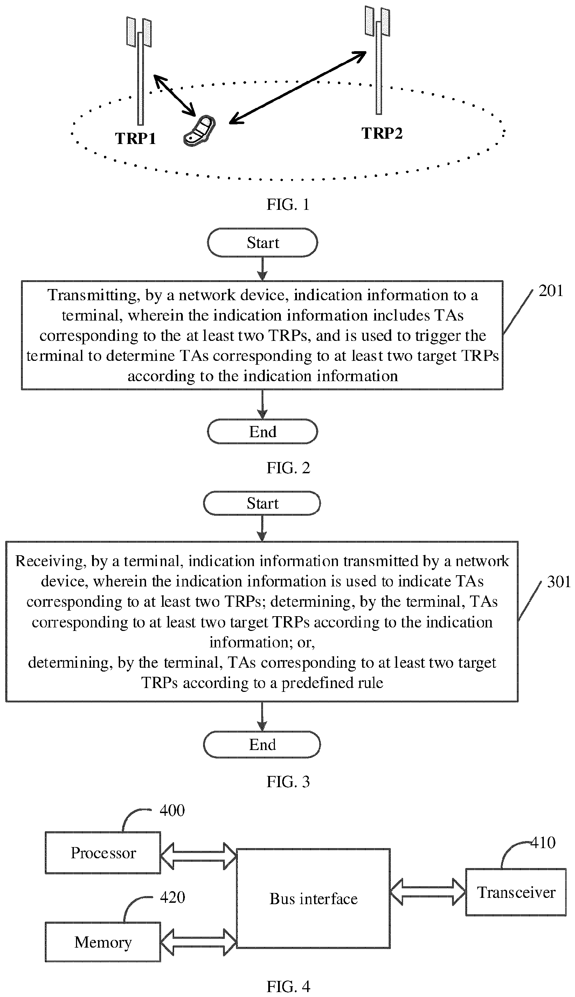

FIG. 1 is a scenario where a terminal performs transmissions to two TRPs. At the first transmission occasion, the terminal performs a transmission to TRP1 and uses a TA to adjust an uplink advance. At the second transmission occasion, the terminal performs a transmission to TRP2 and also uses the TA for adjustment. In the actual scenario, a propagation delay between the terminal and TRP2 is different from a propagation delay between the terminal and TRP1. Therefore, if the TA of TRP1 is still used for compensation for the uplink transmission of TRP2, a problem of desynchronization of the uplink transmissions will cause.

**SUMMARY**

Embodiments of the present disclosure provide an information processing method and an information processing apparatus, and a readable storage medium, to solve the problem of out-of- synchronization of uplink transmissions.

In a first aspect, an embodiment of the present disclosure provides an information processing method, which includes: transmitting, by a network device, first indication information to a terminal, where the first indication information includes TAs corresponding to at least two TRPs (transmission and reception points), and the first indication information is used to determine TAs corresponding to at least two target TRPs; where different target TRPs correspond to different TAs.

Optionally, the transmitting, by the network device, the first indication information to the terminal includes:

transmitting, by the network device, first information to the terminal, where the first information is used to indicate information of at least two TASG (timing advance subgroups); and
transmitting, by the network device, second information to the terminal, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated by one or more of the following ways:

the first information is indicated through a first target field in a TCI (transmission configuration indicator) State (state);
the first information is indicated through a first target field in PUCCH-SpatialRelationInfo (physical uplink control channel spatial relation information);
the first information is indicated through a first target field in a SRS resource set (reference signal resource set);
the first information is indicated through a first target field in a PUCCH-Resource (PUCCH resource); or,
the first information is indicated through a first target field in a PUSCH (Physical Uplink Shared Channel) configuration (PUSCH-Config).

Optionally, in a case where the first information is indicated through the first target field in the TCI State, the first information further includes an identifier of a non-serving cell.

Optionally, the transmitting, by the network device, the second information to the terminal includes: transmitting, by the network device, a higher-layer signaling to the terminal, where the second information is carried in a first target field of the higher-layer signaling.

Optionally, the transmitting, by the network device, the second information to the terminal includes: transmitting, by the network device, a higher-layer signaling to the terminal, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs.

Optionally, the TAs are indicated through a second target field in a control resource set pool where a PDCCH (physical downlink control channel) is located, and the PDCCH is used for scheduling a PDSCH (physical downlink shared channel); the transmitting, by the network device, the first indication information to the terminal includes:

transmitting, by the network device, third information to the terminal, where the third information is used to indicate information of at least two CORESETPoolIndexes; and
transmitting, by the network device, fourth information to the terminal, where the fourth information is used to indicate TAs corresponding to the at least two CORESETPoolIndexes; or the fourth information is used to indicate a reference TA, and first offsets between the TAs corresponding to the at least two CORESETPoolIndexes and the reference TA.

Optionally, the transmitting, by the network device, the fourth information to the terminal includes: transmitting, by the network device, a higher-layer signaling to the terminal, where the fourth information is carried in a second target field of the higher-layer signaling.
Optionally, the method further includes: determining, by the network device, one or more candidate TAs, where the TAs corresponding to the at least two TRPs are determined according to the one or more candidate TAs.
Optionally, the determining, by the network device, the one or more candidate TAs includes:

receiving, by the network device, an uplink reference signal transmitted by the terminal, and determining the one or more candidate TAs according to the uplink reference signal; or
receiving, by the network device, information of the one or more candidate TAs transmitted by the terminal, and determining the one or more candidate TAs according to the information of the one or more candidate TAs.

Optionally, the method further includes: receiving, by the network device, a second offset transmitted by the terminal, where the second offset is an offset between the one or more candidate TAs; the determining, by the network device, the one or more candidate TAs according to the uplink reference signal includes: determining, by the network device, the one or more candidate TAs according to the uplink reference signal and the second offset.
In a second aspect, an embodiment of the present disclosure provides an information processing method, which includes:

receiving, by an terminal, first indication information transmitted by a network device, where the first indication information is used to indicate TAs corresponding to at least two TRPs, and determining, by the terminal, TAs corresponding to at least two target TRPs according to the first indication information; or,
determining, by the terminal, TAs corresponding to at least two target TRPs according to a predefined rule,
where different target TRPs correspond to different TAs.

Optionally, before receiving, by the terminal, the first indication information transmitted by the network device, the method further includes:

transmitting, by the terminal, second indication information to the network device, where the second indication information is used to indicate that the terminal has a capability to support multi-TA adjustment; or
transmitting, by the terminal, third indication information to the network device, where the third indication information is used to indicate that the terminal has a capability to support multi-TA adjustment and a quantity of supported TASGs.

Optionally, the receiving, by the terminal, the first indication information transmitted by the network device includes:

receiving, by the terminal, first information transmitted by the network device, where the first information is used to indicate information of at least two TASGs; and
receiving, by the terminal, second information transmitted by the network device, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated through a first target field in a TCI State; the determining, by the terminal, the TAs corresponding to the at least two target TRPs according to the first indication information includes: determining, by the terminal, the TAs corresponding to the at least two target TRPs according to the first target field in the TCI State and the second information.

Optionally, the first information is indicated through a first target field in PUCCH-SpatialRelationInfo; the determining, by the terminal, the TAs corresponding to the at least two target TRPs according to the first indication information includes: determining, by the terminal, the TAs corresponding to the at least two target TRPs according to the first target field in the PUCCH-SpatialRelationInfo and the second information.

Optionally, the first information is indicated through a first target field in a SRS resource set; the determining, by the terminal, the TAs corresponding to the at least two target TRPs according to the first indication information includes: determining, by the terminal, the TAs corresponding to the at least two target TRPs according to the first target field in the SRS resource set and the second information.

Optionally, the first information is indicated through a first target field in a PUCCH-Resource, or the first information is indicated through a first target field in a PUSCH-Config; the determining, by the terminal, the TAs corresponding to the at least two target TRPs according to the first indication information includes:

in a case where the first information is indicated through the first target field in the PUCCH-Resource, determining, by the terminal, the TAs corresponding to the at least two target TRPs according to the first target field in the PUCCH-Resource and the second information; or

in a case where the first information is indicated through the first target field in the PUSCH-Config, determining, by the terminal, the TAs corresponding to the at least two target TRPs according to the first target field in the PUSCH-Config and the second information.

Optionally, the receiving, by the terminal, the second indication information transmitted by the network device includes:

receiving, by the terminal, a higher-layer signaling from the network device, where the second information is carried in a first target field of the higher-layer signaling; or

receiving, by the terminal, a higher-layer signaling from the network device, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs.

Optionally, the TAs are indicated through a second target field in a control resource set pool where a PDCCH is located, and the PDCCH is used for scheduling a PDSCH; the receiving, by the terminal, the first indication information transmitted by the network device includes:

receiving, by the terminal, third information transmitted by the network device, where the third information is used to indicate information of at least two CORESETPoolIndexes; and

receiving, by the terminal, fourth information transmitted by the network device, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the determining, by the terminal, the TAs corresponding to the at least two target TRPs according to the first indication information includes: determining, by the terminal, the TAs corresponding to the at least two target TRPs according to the second target field and the fourth information.

Optionally, the second target field is carried in a higher-layer signaling.

Optionally, the predefined rule includes a correspondence between transmission occasions and TRPs; the determining, by the terminal, the TAs corresponding to the at least two target TRPs according to the predefined rule includes: determining, by the terminal, the TAs corresponding to the at least two target TRPs according to the correspondence between transmission occasions and TRPs, and a correspondence between transmission occasions and TAs.

Optionally, the method further includes: transmitting, by the terminal, information of one or more candidate TAs to the network device, to enable the network device to determine the TAs corresponding to the at least two TRPs according to the information of the one or more candidate TAs.

Optionally, the transmitting, by the terminal, the information of the one or more candidate TAs to the network device includes:

transmitting, by the terminal, an uplink reference signal to the network device, where the uplink reference signal is used to determine the one or more candidate TAs; or

determining, by the terminal, the information of the one or more candidate TAs and transmitting the information of the one or more candidate TAs to the network device.

Optionally, the method further includes: transmitting, by the terminal, a second offset to the network device, where the second offset is an offset between the one or more candidate TAs.

Optionally, the determining, by the terminal, the information of the one or more candidate TAs includes: determining, by the terminal, the information of the one or more candidate TAs according to a downlink receiving time difference.

In a third aspect, an embodiment of the present disclosure provides an information processing apparatus, applied to a network device, including a memory, a transceiver and a processor. The memory is configured to store a computer program; the transceiver is configured to transmit and receive data under the control of the processor; the processor is configured to read the computer program in the memory to perform the following operations: transmitting first indication information to a terminal, where the first indication information includes TAs corresponding to at least two TRPs, and the first indication information is used for determining TAs corresponding to at least two target TRPs, where different target TRPs correspond to different TAs.

Optionally, the processor is further configured to read the computer program in the memory to perform the following operations:

transmitting first information to a terminal, where the first information is used to indicate information of at least two timing advance subgroups (TASG); and

transmitting second information to the terminal, the second information, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,
the first information is indicated through a first target field in a PUSCH-Config.

Optionally, in a case where the first information is indicated through the first target field in the TCI State, the first information further includes an identifier of a non-serving cell.

Optionally, the processor is further configured to read the computer program in the memory to perform the following operations: transmitting a higher-layer signaling to the terminal, where the second information is carried in a first target field of the higher-layer signaling.

Optionally, the processor is further configured to read the computer program in the memory to perform the following operations: transmitting a higher-layer signaling to the terminal, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs.

Optionally, the TAs are indicated through a second target field in a control resource set pool where a physical downlink control channel (PDCCH) is located, and the PDCCH is used for scheduling a PDSCH; the processor is further configured to read the computer program in the memory to perform the following operations:

transmitting third information to the terminal, where the third information is used to indicate information of at least two CORESETPoolIndexes; and

transmitting fourth information to the terminal, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the processor is further configured to read the computer program in the memory to perform the following operations: transmitting a higher-layer signaling to the terminal, where the fourth information is carried in a second target field of the higher-layer signaling.

Optionally, the processor is further configured to read the computer program in the memory to perform the following operations: determining one or more candidate TAs, where the TAs corresponding to the at least two TRPs are determined according to the one or more candidate TAs.

Optionally, the processor is further configured to read the computer program in the memory to perform the following operations:

receiving an uplink reference signal transmitted by the terminal, and determining the one or more candidate TAs according to the uplink reference signal; or

receiving information of the one or more candidate TAs transmitted by the terminal, and determining the one or more candidate TAs according to the information of the one or more candidate TAs.

In a fourth aspect, an embodiment of the present disclosure provides an information processing apparatus, applied to a terminal, which includes a memory, a transceiver and a processor. The memory is configured to store a computer program; the transceiver is configured to transmit and receive data under the control of the processor; the processor is configured to read the computer program in the memory to perform the following operations:

receiving first indication information transmitted by a network device, where the first indication information is used to indicate TAs corresponding to at least two TRPs, and determining TAs corresponding to at least two target TRPs according to the first indication information; or,

determining TAs corresponding to at least two target TRPs according to a predefined rule, where different target TRPs correspond to different TAs.

Optionally, the processor is further configured to read the computer program in the memory to perform the following operations:

transmitting second indication information to the network device, where the second indication information is used to indicate that the terminal has a capability to support multi-TA adjustment; or

transmitting third indication information to the network device, where the third indication information is used to indicate that the terminal has a capability to support multi-TA adjustment and a quantity of supported TASGs.

Optionally, the processor is further configured to read the computer program in the memory to perform the following operations:

receiving first information transmitted by the network device, where the first information is used to indicate information of at least two TASGs; and

receiving second information transmitted by the network device, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated through a first target field in a TCI State; the processor is further configured to read the computer program in the memory to perform the following operations. The determining the TAs corresponding to the at least two target TRPs according to the first indication information includes: determining the TAs corresponding to the at least two target TRPs according to the first target field in the TCI State and the second information.

Optionally, the first information is indicated through a first target field in PUCCH-SpatialRelationInfo; the processor is further configured to read the computer program in the memory to perform the following operations. The determining the TAs corresponding to the at least two target TRPs according to the first indication information includes: determining the TAs corresponding to the at least two target TRPs according to the first target field in the PUCCH-SpatialRelationInfo and the second information.

Optionally, the first information is indicated through a first target field in an SRS resource set; the processor is further configured to read the computer program in the memory to perform the following operations: determining the TAs corresponding to the at least two target TRPs according to the first target field in the SRS resource set and the second information.

Optionally, the first information is indicated through a first target field in a PUCCH-Resource, or the first information is indicated through a first target field in a PUSCH-Config; the processor is further configured to read the computer program in the memory to perform the following operations:

in a case where the first information is indicated through the first target field in the PUCCH-Resource, determining the TAs corresponding to the at least two target TRPs according to the first target field in the PUCCH-Resource and the second information; or

in a case where the first information is indicated through the first target field in the PUSCH-Config, determining the TAs corresponding to the at least two target TRPs according to the first target field in the PUSCH-Config and the second information.

Optionally, the processor is further configured to read the computer program in the memory to perform the following operations:

receiving a higher-layer signaling from the network device, where the second information is carried in a first target field of the higher-layer signaling; or

receiving a higher-layer signaling from the network device, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs.

Optionally, the TAs are indicated through a second target field in a control resource pool where a PDCCH is located, and the PDCCH is used for scheduling a PDSCH; the processor is further configured to read the computer program in the memory to perform the following operations:

receiving third information transmitted by the network device, where the third information is used to indicate information of at least two CORESETPoolIndexes;

receiving fourth information transmitted by the network device, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the processor is further configured to read the computer program in the memory to perform the following operations: determining the TAs corresponding to the at least two target TRPs according to the second target field and the fourth information.

Optionally, the predefined rule includes a correspondence between transmission occasions and TRPs; the processor is further configured to read the computer program in the memory to perform the following operations: determining the TAs corresponding to the at least two target TRPs according to the correspondence between transmission occasions and TRPs, and a correspondence between transmission occasions and TAs.

Optionally, the processor is further configured to read the computer program in the memory to perform the following operations: transmitting information of one or more candidate TAs to the network device, to enable the network device to determine the TAs corresponding to the at least two TRPs according to the information of the one or more candidate TAs.

Optionally, the processor is further configured to read the computer program in the memory to perform the following operations:

transmitting an uplink reference signal to the network device, where the uplink reference signal is used to determine the one or more candidate TAs; or

determining the information of the one or more candidate TAs and transmitting the information of the one or more candidate TAs to the network device.

In a fifth aspect, an embodiment of the present disclosure provides an information processing apparatus, applied to a network device. The apparatus includes a first transmitting unit, configured to transmit first indication information to a terminal, where the first indication information includes TAs corresponding to at least two TRPs, and the first indication information is used to determine TAs corresponding to at least two target TRPs; where different target TRPs correspond to different TAs.

Optionally, the first transmitting unit includes:

a first transmitting subunit, configured to transmit first information to the terminal, where the first information is used to indicate information of at least two timing advance subgroups (TASG);

a second transmitting subunit, configured to transmit second information to the terminal, where the second information is used to indicate respective TAs corresponding to the at least two TASGs, or the second information is used to indicate a reference TA, and first offsets between the TAs corresponding to the at least two TASGs and the reference TA,

where among the at least two TASGs, TAs corresponding to at least two TASGs are different, or first offsets of TAs corresponding to at least two TASGs are different.

Optionally, the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,
the first information is indicated through a first target field in a PUSCH-Config.

Optionally, in a case where the first information is indicated through the first target field in the TCI State, the first information further includes an identifier of a non-serving cell.

Optionally, the second transmitting subunit is further configured to transmit a higher-layer signaling to the terminal, where the second information is carried in a first target field of the higher-layer signaling.

Optionally, the second transmitting subunit is further configured to transmit a higher-layer signaling to the terminal, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs.

Optionally, the TAs are indicated through a second target field in a control resource set pool where a physical downlink control channel (PDCCH) is located, and the PDCCH is used for scheduling a PDSCH. The first transmitting unit includes:

a third transmitting subunit, configured to transmit third information to the terminal, where the third information is used to indicate information of at least two CORESETPoolIndexes; and
a fourth transmitting subunit, configured to transmit fourth information to the terminal, where the fourth information is used to indicate TAs corresponding to the information of the at least two CORESETPoolIndexes.

Optionally, the fourth transmitting subunit is configured to: transmit a higher-layer signaling to the terminal, where the first information is carried in a second target field of the higher-layer signaling, and the fourth information is used to indicate a correspondence between the at least two CORESETPoolIndexes and TAs.

Optionally, the apparatus further includes: a first determination unit, configured to determine one or more candidate TAs, where the TAs corresponding to the at least two TRPs are determined according to the one or more candidate TAs.

Optionally, the first determination unit is configured to receive an uplink reference signal transmitted by the terminal, and determine the one or more candidate TAs according to the uplink reference signal; or receive information of the one or more candidate TAs transmitted by the terminal, and determine the one or more candidate TAs according to the information of the one or more candidate TAs.

Optionally, the apparatus further includes: a first receiving unit, configured to receive a second offset transmitted by a terminal, where the second offset is an offset between the one or more candidate TAs; the first determination unit is further configured to determine the one or more candidate TAs according to the uplink reference signal and the second offset.

In a sixth aspect, an embodiment of the present disclosure provides an information processing apparatus, applied to a terminal. The apparatus includes:

a first receiving unit, configured to receive first indication information transmitted by a network device, where the first indication information is used to indicate TAs corresponding to at least TRPs, and a first determination unit, configured to determine TAs corresponding to at least two target TRPs according to the first indication information; or
a second determination unit, configured to determine TAs corresponding to at least two target TRPs according to a predefined rule, where different target TRPs correspond to different TAs.

Optionally, the apparatus further includes a first transmitting unit, configured to:

transmit second indication information to the network device, where the second indication information is used to indicate that the terminal has a capability to support multi-TA adjustment; or
transmit third indication information to the network device, where the third indication information is used to indicate that the terminal has a capability to support multi-TA adjustment and a quantity of supported TASGs.

Optionally, the first receiving unit includes:

a first receiving subunit, configured to receive first information transmitted by the network device, where the first information is used to indicate information of at least two TASGs; and

a second receiving subunit, configured to receive second information transmitted by the network device, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated through a first target field in a TCI State; the first determination unit is configured to determine the TAs corresponding to the at least two target TRPs according to the first target field in the TCI State and the second information.

Optionally, the first information is indicated through a first target field in PUCCH-SpatialRelationInfo; the first determination unit is configured to determine the TAs corresponding to the at least two target TRPs according to the first target field in the PUCCH-SpatialRelationInfo and the second information.

Optionally, the first information is indicated through a first target field in an SRS resource set; the first determination unit is configured to determine the TAs corresponding to the at least two target TRPs according to the first target field in the SRS resource set and the second information.

Optionally, the first information is indicated by a first target field in a PUCCH-Resource, or the first information is indicated by a first target field in a PUSCH-Config; the first determination unit is configured to: determine the TAs corresponding to the at least two target TRPs according to the first target field and the second information in the PUCCH-Resource in a case where the first information is indicated through the first target field in the PUCCH-Resource; or determine the TAs corresponding to the at least two target TRPs according to the first target field in the PUSCH-Config and the second information in a case where the first information is indicated through the first target field in the PUSCH-Config.

Optionally, the second receiving subunit is configured to: receive a higher-layer signaling from the network device, where the second information is carried in a first target field of the higher-layer signaling; or receive a higher-layer signaling from the network device, where the higher-layer signaling includes at least two TA commands, and the at least two TA commands are used to indicate at least two TAs.

Optionally, the TAs are indicated through a second target field in a control resource pool where a PDCCH is located, and the PDCCH is used to schedule a PDSCH; the first receiving unit includes:

a third receiving subunit, configured to receive third information transmitted by the network device, where the third information is used to indicate information of at least two CORESETPoolIndexes; and

a fourth receiving subunit, configured to receive fourth information transmitted by the network device, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the first determination unit is configured to determine the TAs corresponding to at least two target TRPs according to the second target field and the fourth information; and the second target field is carried in a higher-layer signaling.

Optionally, the predefined rule includes a correspondence between transmission occasions and TRPs; and the second determination unit is configured to determine the TAs corresponding to the at least two target TRPs according to the correspondence between transmission occasions and TRPs, and a correspondence between transmission occasions and TAs.

Optionally, the apparatus further includes: a second transmitting unit, configured to transmit information of one or more candidate TAs to the network device, to enable the network device to determine the TAs corresponding to the at least two TRPs according to the information of the one or more candidate TAs.

Optionally, the second transmitting unit is configured to: transmit an uplink reference signal to the network device, where the uplink reference signal is used to determine the one or more candidate TAs; or determine the information of the one or more candidate TAs and transmit the information of the one or more candidate TAs to the network device.

Optionally, the apparatus further includes: a third transmitting unit, configured to transmit a second offset to the network device, where the second offset is an offset between the one or more candidate TAs.

Optionally, the second transmitting unit is further configured to determine the information of the one or more candidate TAs according to a downlink receiving time difference.

In a seventh aspect, an embodiment of the present disclosure provides a processor-readable storage medium, storing a computer program, where the computer program is configured to cause a processor to execute steps in the above information processing method.

In the embodiments of the present disclosure, the network device may indicate TAs corresponding to at least two TRPs to the terminal, through first indication information. Therefore, the terminal can select different TAs from the TAs for at least two target TRPs according to the first indication information. Therefore, with the solutions according to the embodiments of the present disclosure, the terminal can use different TAs to adjust uplink transmissions of respective TRPs, so as to solve the problem of uplink transmissions out of synchronization.

## BRIEF DESCRIPTION OF THE DRAWINGS

FIG. 1 is a schematic diagram of transmissions between a terminal and TRPs in the related technologies;

FIG. 2 is a first flow chart of an information processing method provided by an embodiment of the present disclosure;

FIG. 3 is a second flow chart of an information processing method provided by an embodiment of the present disclosure;

FIG. 4 is a first structural diagram of an information processing apparatus provided by an embodiment of the present disclosure;

FIG. 5 is a second structural diagram of an information processing apparatus provided by an embodiment of the present disclosure;

FIG. 6 is a third structural diagram of an information processing apparatus provided by an embodiment of the present disclosure; and

FIG. 7 is a fourth structural diagram of an information processing apparatus provided by an embodiment of the present disclosure.

## DETAILED DESCRIPTION

In embodiments of the present disclosure, the term "and/or" describes the association relationship of associated objects and indicates that there may be three types of relationships. For example, A and/or B may represent three situations including: A alone, both A and B, and B alone. The character "/" generally indicates that the associated objects before and after the character are in an "or" relationship.

The term "multiple" used in the embodiments of the present disclosure refers to two or more, and other quantifiers are similar thereto.

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art can obtain other embodiments without creative effort, all of which shall fall within the scope of the present disclosure.

Embodiments of the present disclosure provide an information processing method and an information processing apparatus, to solve the problem of out-of-synchronization of uplink transmissions.

The method and the apparatus are based on the same application concept. Since principles of the method and the apparatus to solve the problem are similar, implementations of the apparatus and the method can be referred to each other, and the repeated details will not be described.

Referring to FIG. 2, FIG. 2 is a flow chart of an information processing method provided by an embodiment of the present disclosure. As shown in FIG. 2, the method includes the following steps.

Step 201: transmitting, by a network device, first indication information to a terminal, where the first indication information includes TAs corresponding to the at least two TRPs, and the first indication information is used to determine TAs corresponding to at least two target TRPs; where different target TRPs correspond to different TAs.

Specifically, in the embodiment of the present disclosure, the network device may transmit first information to the terminal, where the first information is used to indicate information of at least two TASGs. Subsequently, the network device transmits second information to the terminal, where the second information is used to indicate TAs corresponding to the at least two TASGs, or the second information is used to indicate a reference TA, and first offsets between the TAs corresponding to the at least two TASGs and the reference TA. Among the at least two TASGs, TAs corresponding to at least two TASGs are different, or first offsets of TAs corresponding to at least two TASGs are different.

Considering the inter-cell (inter-cell) multi-TRP (multi-TRP) architecture, the first information may further include PCI (Physical Cell Identifier) information of other cells.

The reference TA may be a TA corresponding to a certain TASG, or may also be an optional reference value. The first offset may be reported by the terminal to the network device, or may be determined by the network device itself. For example, the network device may select the first offset from a certain value set, or obtain the first offset according to a certain calculation method, and the calculation method is not limited here.

For example, it is assumed that four TASGs are notified by the network device, where TAs corresponding to at least two TASGs are different, or first offsets of TAs corresponding to at least two TASGs are different.

Each TASG belongs to a TAG (Timing Advance Group), and each TASG maintains a TA. A TRP can be distinguished through a TASG, that is, there is a certain correspondence between the TASG and the TRP.

The first information may be RRC (Radio Resource Control) configuration information, and the second information may be information used to update TA, for example, it may be higher layer signaling, such as RRC signaling, MAC (Medium Access Control) CE (Control Element) signaling, etc.

In an embodiment of the present disclosure, the terminal includes a terminal having a capability of supporting multiple TAs, so as to be applicable to multi-TRP scenarios.

On the side of the network device, information of multiple TASGs may be indicated by establishing an association between TAs and uplink transmissions. For example, the network device may establish an association between TAs and uplink transmission channels (PUCCH (Physical Uplink Control Channel), PUSCH (Physical Uplink Shared Channel), etc.). Each TASG may be associated with a TCI state or spatial relation info (spatial relation information), which indicates an uplink transmission, and may also be associated with an SRS resource set or a PUCCH resource. Considering a case of panel switching or simultaneous transmissions when a terminal has multiple uplink panels (panels), the first indication information of the panels may also be carried in the association relationship, such as capability value set index (capability value set index). For another example, the network device may establish an association between TA and CORESETPoolindex. Specifically, considering that PUCCH transmission is related to downlink PDSCH, a TA is associated with a CORESETPoolIndex included in a CORESET (Control resource set) where a PDCCH that schedules a PDSCH is located.

Various manners of implementing the first indication information are described in detail below.

1. Network device establishes an association between TAs and uplink transmissions.

In order to increase the flexibility of transmitting the first indication information to the terminal, information of TASG may be indicated in at least one of the following ways.

(1) The first information is indicated through a first target field (such as a TASG identification field, etc.) in a TCI State.

The base station adds TA-SubgroupId (TASG identifier) into a TCI state through RRC configuration, which corresponds to an uplink channel where a transmission is performed to a certain TRP under a unified TCI (unified TCI) architecture. If a TCI state is not configured with a TASG, a default TASG is used, such as a TASG with the lowest ID.

Considering the inter-cell (inter-cell) multi-TRP architecture, qcl-type D source RS/spatial relation reference RS in a TCI state associated with a TA subgroup in this case may carry a non-serving cell ID (non-serving cell ID).

(2) The first information is indicated through a first target field (such as a TASG identification field, etc.) in PUCCH-SpatialRelationInfo.

The network device adds TA-SubgroupId into PUCCH-SpatialRelationInfo through RRC configuration, which corresponds to a transmission of a PUCCH channel to a certain TRP.

(3) The first information is indicated through a first target field (such as a TASG identification field, etc.) in an SRS resource set.

The network device adds TA-SubgroupId into an SRS (Sounding Reference Signal) resource set through RRC configuration, and an SRI (SRS resource indicator) field in DCI (Downlink Control Information) is used to instruct a terminal to transmit a PUSCH channel to a certain TRP.

(4) The first information is indicated through a first target field (such as a TASG identification field, etc.) in a PUCCH-Resource.

The network device adds TA-SubgroupId into the PUCCH-Resource through RRC configuration, which corresponds to a TA adjustment when a PUCCH resource is scheduled to perform a transmission to a certain TRP.

(5) The first information is indicated through a first target field (such as a TASG identification field, etc.) in a PUSCH configuration (PUSCH-Config).

In actual applications, the network device adds TA-SubgroupId into PUSCH-Config through RRC configuration, which corresponds to a TA adjustment when a PUSCH is scheduled to perform a transmission to a certain TRP.

After indicating the first information to the terminal, the network device may transmit second information to the terminal, to update or indicate the TA.

Specifically, the network device transmits a higher-layer signaling to the terminal, and the second information is carried in a first target field of the higher-layer signaling (such as a TASG identification field, etc.). For example, the second information may be used to indicate a correspondence between at least two TASGs and TAs.

For example, the network device may update the TA through an MAC CE carrying a TA subgroup ID. For example, the network device sends two MAC-CE signalings to two TRPs, as shown in Table 1.

Table 1

| TA subgroup ID #1 | TA command 1 |
|---|---|
| TA subgroup ID #2 | TA command 2 |

Specifically, the network device transmits higher-layer signaling to the terminal. The higher-layer signaling includes at least two TA commands. The at least two TA commands are used to indicate at least two TAs, or the first part of the at least two TA commands is used. In order to indicate the reference TA, the second part of the TA command is used to indicate the first offset between TAs.

For example, assume there are two TA commands, one of which indicates the reference TA, and the other TA command is used to indicate the first offset between TAs.

For example, the network device does not carry the TA subgroup ID in MAC-CE signaling. For example, a MAC CE carries two TA commands, corresponding to TA#1 and TA#2 adjustments respectively, as shown in Table 2.

Table 2

| TA command 1 |
|---|
| TA command 2 |

2. Network device establishes an association between TA and CORESETPoolindex.

In this case, the TA is indicated through a second target field (such as a CORESETPoolIndex (control resource set pool index) field) in a control resource set pool where a PDCCH is located, and the PDCCH is used to schedule a PDSCH.

Specifically, the network device may transmit third information to the terminal, where the third information is used to indicate information of at least two CORESETPoolIndexes; and then, the network device transmits fourth information to the terminal, where the fourth information is used to indicate TAs corresponding to the information of the at least two CORESETPoolIndexes, or the fourth information is used to indicate a reference TA and first offsets of the TAs corresponding to the at least two CORESETPoolIndexes relative to the reference TA.

The reference TA may be a TA corresponding to a certain CORESETPoolIndex, or it may also be an optional reference value. The first offset may be reported by the terminal to the network device, or may be determined by the network device itself. For example, the network device may select the first offset from a certain value set, or obtain the first offset according to a certain calculation method. The calculation method is not limited here.

The third information may be transmitted through an RRC configuration signaling, and the fourth information may be transmitted through a higher layer signaling.

Specifically, the network device transmits a higher-layer signaling to the terminal, and the fourth information is carried in a second target field of the higher-layer signaling (such as a CORESETPoolIndex field). For example, the fourth information is used to indicate a correspondence between at least two CORESETPoolIndexes and TAs.

For example, the network device updates the TA through an MAC CE carrying a CORESETPoolIndex. For example, the base station transmits two MAC-CE signaling to two TRPs, as shown in Table 3.

Table 3

| CORESETPoolIndex #1 | TA command 1 |
|---|---|
| CORESETPoolIndex #2 | TA command 2 |

In the embodiments of the present disclosure, the network device may indicate TAs corresponding to at least two TRPs to the terminal, through first indication information. Therefore, the terminal can select different TAs from the TAs for at least two target TRPs according to the first indication information. Therefore, by using the solutions according to the embodiments of the present disclosure, the terminal can use different TAs to adjust uplink transmissions of respective TRPs, so as to solve the problem of uplink transmissions out of synchronization.

Optionally, according to the above embodiments, the network device may determine one or more candidate TAs, and the TAs corresponding to the at least two TRPs are determined according to information of the one or more candidate TAs. That is, the network device can select TAs corresponding to the at least two TRPs from the candidate TAs.

For example, the network device receives an uplink reference signal transmitted by the terminal, and determines one or more candidate TAs according to the uplink reference signal. Optionally, the network device may also receive a second offset transmitted by the terminal, and the second offset is an offset between one or more candidate TAs. In this way, the network device may determine one or more candidate TAs according to the uplink reference signal and the second offset.

For another example, the network device receives information of one or more candidate TAs transmitted by the terminal, and determines the one or more candidate TAs according to the information of the one or more candidate TAs. The information of the one or more candidate TAs may include values of the one or more candidate TAs, or may include reference TAs, offsets between TAs and the reference TAs, and so on.

In practical applications, the terminal transmits an uplink reference signal to the network device. The uplink reference signal includes a preamble (preamble), SRS (Sounding Reference Signal), or other customized uplink reference signals, such as DMRS (Demodulation Reference Signal). Specifically, the terminal may actively trigger a transmission of an uplink reference signal, or the network device may instruct the terminal to transmit an uplink reference signal. The terminal may transmit an uplink reference signal once or multiple times. In a case where the network device instructs the terminal to transmit an uplink reference signal, the network device may instruct the terminal to transmit information such as time and frequency resources of the uplink signal and an index of the uplink signal.

The network device receives the uplink reference signal transmitted by the terminal and obtains a TA. Specifically, the network device may obtain one or more TAs. The network device may obtain each of the TAs individually, or may obtain a TA according to a previous TA, and a second offset between the TA and the previous TA. For example, the network device may obtain a TA that needs to be determined currently by adding the second offset into the previous TA.

The second offset may be obtained through estimation by the network device, or reported by the terminal to the network device.

Referring to FIG. 3, FIG. 3 is a flow chart of an information processing method provided by an embodiment of the present disclosure. As shown in FIG. 3, the method includes the following steps.

Step 301: receiving, by a terminal, first indication information transmitted by a network device, where the first indication information is used to indicate TAs corresponding to at least two TRPs; determining, by the terminal, TAs corresponding to at least two target TRPs according to the first indication information; or, determining, by the terminal, TAs corresponding to at least two target TRPs according to a predefined rule, where different target TRPs correspond to different TAs.

In practical applications, in order to enable the network device to accurately learn the capability of the terminal, the terminal may further transmit second indication information to the network device. The second indication information is used to indicate that the terminal has a capability to support multi-TA adjustment. Optionally, the terminal may further transmit third indication information to the network device, where the third indication information is used to indicate that the terminal has a capability to support multi-TA adjustment and the number of supported TASGs.

Specifically, the terminal receives the first information transmitted by the network device, and the first information is used to indicate information of at least two TASGs. After that, the terminal receives the second information transmitted by the network device, where the second information is used to indicate TAs respectively corresponding to the at least two TASGs, or the second information is used to indicate a reference TA, and a first offset between the TAs corresponding to the at least two TASGs. Among the at least two TASGs, the at least two TASGs correspond to different TAs, or the first offsets of the TAs corresponding to the at least two TASGs are different. For the meaning and obtaining method of the first offset, reference may be made to the description of the foregoing method embodiments.

The receiving, by the terminal, the first indication information transmitted by the network device may include: receiving, by the terminal, a higher-layer signaling from the network device, where the second information is carried in a first target field (for example, TASG identification field) of the higher-layer signaling; or receiving, by the terminal, a higher-layer signaling from the network device. The higher-layer signaling includes at least two TA commands, the at least two TA commands are used to indicate at least two TAs; or a first TA command of the at least two TA commands is used to indicate a reference TA, and a second TA command of the at least two TA commands is used to indicate offsets between the TAs and the reference TA.

For example, it is assumed that there are two TA commands, one of the TA commands indicates the reference TA, and the other TA command is used to indicate the first offsets between the TAs. The terminal may calculate another TA according to information indicated by the two TA commands.

When the terminal determines the TAs corresponding to the at least two target TRPs according to the first indication information of the network device, the terminal may determine in different ways according to different contents included in the first indication information.

In a case where the first information is indicated through a first target field (such as a TASG identification field) in a TCI State, then the terminal determines the TAs corresponding to the at least two target TRPs according to the first target field and the second information in the TCI State.

In a case where the first information is indicated through a first target field (such as a TASG identification field) in PUCCH-SpatialRelationInfo, the terminal determines the TAs corresponding to the at least two target TRPs according to the first target field and the second information in the PUCCH-SpatialRelationInfo.

In a case where the first information is indicated through a first target field (such as a TASG identification field) in an SRS resource set, then the terminal determines the TAs corresponding to the at least two target TRPs according to the first target field and the second information in the SRS resource set.

In a case where the first information is indicated through a first target field (such as a TASG identification field) in a PUCCH-Resource, then the terminal determines the TAs corresponding to the at least two target TRPs according to the first target field and the second information in the PUCCH-Resource.

In a case where the first information is indicated through a first target field (such as a TASG identification field) in PUSCH-Config, then the terminal determines the TAs corresponding to the at least two target TRPs according to the first target field and the second information of the PUSCH-Config.

In the above methods, specifically, the terminal may determine a corresponding relationship between TASGs and TRPs according to the first information and based on a certain rule. The rule may be pre-configured. Afterwards, the terminal may specifically determine a TA corresponding to a TRP according to the second information.

In the above process, if the second information directly indicates the TAs corresponding to the at least two TASGs, then the terminal may directly determine the TAs corresponding to the at least two target TRPs according to the first target field and the second information. If the second information is used to indicate the reference TA, and first offsets between the TAs corresponding to at least two TASGs and the reference TA, then the terminal may calculate a TA corresponding to a TRP according to the reference TA, and a first offset of a TA corresponding to a certain TASG relative to the reference TA.

In a case where the TAs are indicated by a second target field (such as a CORESETPoolIndex field) in a control resource set pool where a PDCCH (PDCCH is used to schedule PDSCH) is located, in actual applications, the terminal receives third information transmitted by the network device, where the third information is used to indicate information of at least two CORESETPoolIndexes. Afterwards, the terminal receives fourth information transmitted by the network device. The fourth information is used to indicate TAs corresponding to the at least two CORESETPoolIndexes, or the fourth information is used to indicate a reference TA and first offsets of TAs corresponding to at least two CORESETPoolIndexes. In this case, the terminal determines the TAs corresponding to the at least two target TRPs according to the second target field (such as a CORESETPoolIndex field) and the fourth information.

Specifically, the terminal may determine a corresponding relationship between CORESETPoolIndex and TRP according to the third information and a certain rule. The rule may be pre-configured. Afterwards, the terminal may specifically determine the TAs corresponding to the TRPs according to the fourth information.

In the above process, if the fourth information directly indicates TAs corresponding to at least two CORESETPoolIndexes, then the terminal may directly determine the TAs corresponding to the at least two target TRPs according to the second target field and the fourth information. If the fourth information is used to indicate a reference TA and first offsets of the TAs corresponding to the at least two CORESETPoolIndexes, then the terminal may calculate a TA corresponding to a certain CORESETPoolIndex according to the reference TA and a first offset of the TA corresponding to the certain CORESETPoolIndex relative to the reference TA.

The second target field (such as a CORESETPoolIndex field) is carried in a higher-layer signaling.

In addition, the terminal may also determine the TAs corresponding to the at least two target TRPs according to a predefined rule. The predefined rule includes a correspondence between transmission occasions and TRPs. In this case, the terminal determines the TAs corresponding to the at least two target TRPs according to the correspondence between transmission occasions and TRPs, and the correspondence between transmission occasions and TAs.

For example, by using predefined rules, a certain TA is used for adjustment at certain transmission occasions (slot/subframe/symbol), and another TA is used for adjustment at other transmission occasions. As shown in Table 4, adjustment is performed at odd-numbered slots with TA#1, which corresponds to a TA adjustment when an uplink transmission is performed to TRP1, and adjustment is performed at even-numbered slots with TA#2, which corresponds to the TA adjustment when an uplink transmission is performed to TRP2.

Table 4

| slot#1 | slot#2 | slot#3 | slot#4 |
|--------|--------|--------|--------|
| TA#1 | TA#2 | TA#1 | TA#2 |

After receiving a TA indicated by the network device, the terminal calculates a time adjustment amount of an uplink transmission according to the TA indicated by the network device, and adjusts an uplink transmission time according to the calculated time adjustment amount. The formula for calculating the time adjustment amount is as follows:

$$NTA_{new} = NTA_{old} + (TA - 31) * 16 * \frac{64}{2^u}$$ ; TA = 0,1,2,3, ...,63, where $NTA_{new}$ represents a time adjustment amount after adjustment, $NTA_{old}$ represents a time adjustment amount before adjustment, and u represents spacing of subcarrier.

In the embodiments of the present disclosure, the network device may indicate TAs corresponding to the at least two TRPs to the terminal through first indication information. Therefore, the terminal can select different TAs for at least two target TRPs from the TAs according to the first indication information. Therefore, based on the solution of the embodiments of the present disclosure, the terminal can use different TAs to adjust uplink transmissions of all TRPs, thereby solving the problem of uplink transmissions out of synchronization.

Optionally, on the basis of the above embodiments, the terminal may further transmit information of one or more candidate TAs to the network device, to enable the network device to determine the TAs corresponding to the at least two TRPs according to the information of the one or more candidate TAs. The information of the one or more candidate TAs may include values of one or more candidate TAs, or may include reference a reference TA, offsets between the TAs, and so on.

For example, the terminal transmits an uplink reference signal to the network device, to enable the network device to determine the candidate TA according to the uplink reference signal; or the terminal determines information of one or more candidate TAs and transmits the information of the one or more candidate TAs to the network device.

In practical applications, the terminal transmits an uplink reference signal to the network device. The uplink reference signal includes preamble, SRS or other customized uplink reference signals, such as DMRS. Specifically, the terminal may actively trigger a transmission of an uplink reference signal, or the network device may instruct the terminal to transmit an uplink reference signal. The terminal may transmit the uplink reference signal once or multiple times. When the network device instructs the terminal to transmit an uplink reference signal, the network device may instruct the terminal to transmit information such as time and frequency resources of the uplink signal and an index of the uplink signal. In order to facilitate the network device to determine the candidate TAs, the terminal may also transmit a second offset to the network device, where the second offset is an offset between one or more candidate TAs.

In a case where the terminal determines information of one or more candidate TAs by itself, the terminal may determine the information of the one or more candidate TAs according to a downlink reception time difference. For example, the terminal may determine the downlink reception time difference by measuring a downlink reference signal transmitted by the network device, and may use the downlink reception time difference as a candidate TA.

Specific implementation processes of the present disclosure will be described below in combination with different embodiments, by taking an example that the network device is a base station.

In practical applications, the base station adds TASG-ID into a TAG configuration through RRC configuration, to indicate TASG-related information configured through RRC signaling.

In an embodiment of the present disclosure, the terminal reports a capability and notifies the base station that the number of TA subgroups it can support is 2. The base station configures a TCI state pool {TCI state1, TCI state2, TCI state3, TCI state 4, TCI state5, TCI state6, TCI state7, TCI state8} to the terminal through RRC. The base station configures TA subgroup ID1 in {TCI state1, TCI state2, TCI state3, TCI state4}, and configures TA subgroup ID2 in {TCI state5, TCI state6, TCI state7, TCI state8} through RRC signaling. In the n-th slot, the base station sends beam indication DCI, which includes TCI state1 and TCI state5, and indicates that subsequent PUCCH/PUSCH is transmitted by using beams to TRP1 and TRP2, respectively. The base station sends an MAC CE indicating updated TAs in the (n+3)-th slot, as shown in Table 5:

Table 5

| TA subgroup ID #1 | 32 |
|---|---|
| TA subgroup ID #2 | 63 |

After receiving the indication from the base station, the terminal determines that TAs for TRP1 and TRP2 are 32 and 63, respectively, and calculates absolute TA values (TA adjustment amounts) according to the following formula:

$$\mathrm{NTA_{new}} = \mathrm{NTA_{old}} + (\mathrm{TA} - 31) * 16 * \frac{64}{2^u}$$ . Specifically:

$$\mathrm{NTA}_{new1} = 10 + (32 - 31) * 16 * \frac{64}{22} = 266(\mathrm{Tc})$$

$$\mathrm{NTA}_{new2} = 20 + (63 - 31) * 16 * \frac{64}{22} = 8212(\mathrm{Tc}).$$

It is assumed here that the spacing of subcarrier is 60KHz (u = 2), Nf = 4096, Tc = 4.07ns.

When the terminal performs an uplink transmission to TRP1 according to the calculated TA adjustment amount, the terminal transmits a PUCCH/PUSCH in advance by $\mathrm{NTA}_{new1}$ on the basis of downlink reception. When performing an uplink transmission to TRP2, the terminal transmits a PUCCH/PUSCH in advance by $NTA_{new2}$ on the basis of downlink reception.

In an embodiment of the present disclosure, the terminal reports a capability and notifies the base station that the number of TA subgroups it can support is 2. The base station configures SRS resource set1 and SRS resource set2 through RRC, and configures TA subgroup ID1 in SRS resource set1 and TA subgroup ID2 in SRS resource set2. In the n-th slot, the base station sends DCI, where an SRS resource set field in the DCI indicates that PUSCH is transmitted to two TRPs simultaneously, and beams used for PUSCH transmissions are indicated by the contents indicated by the corresponding SRI1 and SRI2 fields. The base station sends an MAC CE indicating updated TAs in the (n+3)-th slot, as shown in Table 5.

After receiving the indication from the base station, the terminal determines that TAs for TRP1 and TRP2 are 32 and 63, respectively, and calculates absolute TA values according to the following formula: $NTA_{new} = NTA_{old} + (TA - 31) * 16 * \frac{64}{2^u}$. Specifically:

$$NTA_{new1} = 10 + (32 - 31) * 16 * \frac{64}{2^2} = 266(Tc)$$

$$NTA_{new2} = 20 + (63 - 31) * 16 * \frac{64}{2^2} = 8212(Tc).$$

It is assumed here that the spacing of subcarrier is 60KHz (u = 2), Nf = 4096, Tc = 4.07ns.

When the terminal performs an uplink transmission to TRP1 according to the calculated TA adjustment amount, the terminal transmits a PUSCH in advance by $NTA_{new1}$ on the basis of downlink reception. When performing an uplink transmission to TRP2, the terminal transmits a PUSCH in advance by $NTA_{new2}$ on the basis of downlink reception.

In an embodiment of the present disclosure, the terminal reports a capability and notifies the base station that the number of TA subgroups it can support is 2. The base station is configured through RRC: PUCCH-SpatialRelationInfo1, PUCCH-SpatialRelationInfo2, PUCCH-SpatialRelationInfo3, PUCCH-SpatialRelationInfo4. TA subgroup ID1 is configured in PUCCH-SpatialRelationInfo1 and PUCCH-SpatialRelationInfo2, and TA subgroup ID2 is configured in PUCCH-SpatialRelationInfo3 and PUCCH-SpatialRelationInfo4. In the n-th slot, the base station sends DCI, schedules PUCCH-resource1 for uplink PUCCH repeated transmissions, and uses an MAC-CE to activate contents indicated by PUCCH-SpatialRelationInfo1 and PUCCH-SpatialRelationInfo3 to be beams for PUCCH-resource1 transmissions, which correspond to a PUCCH transmission to TRP1 and a PUCCH transmission to TRP2, respectively. The base station sends an MAC CE indicating the updated TAs in the (n+3)-th slot, as shown in Table 5.

After receiving the indication from the base station, the terminal determines that TAs for TRP1 and TRP2 are 32 and 63, respectively, and calculates absolute TA values according to the following formula: $NTA_{new} = NTA_{old} + (TA - 31) * 16 * \frac{64}{2^u}$. Specifically:

$$NTA_{new1} = 10 + (32 - 31) * 16 * \frac{64}{2^2} = 266(Tc)$$

$$NTA_{new2} = 20 + (63 - 31) * 16 * \frac{64}{2^2} = 8212(Tc).$$

It is assumed here that the spacing of subcarrier is 60KHz (u = 2), Nf = 4096, Tc = 4.07ns.

When the terminal performs an uplink transmission to TRP1 according to the calculated TA adjustment amount, the terminal transmits a PUCCH in advance by $NTA_{new1}$ on the basis of downlink reception. When performing an uplink transmission to TRP2, the terminal transmits a PUCCH in advance by $NTA_{new2}$ on the basis of downlink reception.

In an embodiment of the present disclosure, the terminal performs capability reporting, and notifies the base station that the number of TA subgroups it can support is 2. The base station configures CORESET1, CORESET2, CORESET3 and CORESET4 to the terminal through RRC, where coresetPoolIndex of CORESET1 and CORESET2 are 0, and coresetPoolIndex of CORESET3 and CORESET4 are 1. In the n-th slot, the base station sends DCI1, where a CORESETPoolIndex of a CORESET corresponding to a PDCCH carrying DCI1 is 0, scheduling PDSCH1 is sent through TRP1, PUCCH1 carrying a HARQ-ACK (Hybrid automatic repeat request acknowledgment) of PDSCH1 is sent to TRP1. At the same time, the base station sends DCI2, where a CORESETPoolIndex of a CORESET (Control resource set) corresponding to a PDCCH carrying DCI2 is 1, scheduling PDSCH2 is sent through TRP2, and PUCCH2 carrying a HARQ-ACK of PDSCH2 is sent to TRP2. The base station sends an MAC CE indicating the updated TAs in the (n+3)-th slot, as shown in Table 6:

Table 6

| CORESETPoolIndex #1 | 32 |
|---|---|
| CORESETPoolIndex #2 | 63 |

It is defined by the system that TAs for transmitting PUCCH1 and PUCCH2 are associated with coresetPoolIndexes included in CORESETs of PDCCHs where DCIs for scheduling PUCCH1 transmission and PUCCH2 transmission are located. The terminal receives the instruction from the base station, and determines that TAs corresponding to a PUCCH1 transmission from TRP1 and a PUCCH2 transmission from TRP2 are 32 and 63, respectively. The terminal performs calculation according to the following formula: $\text{NTA}_{\text{new}} = \text{NTA}_{\text{old}} + (\text{TA} - 31) * 16 * \frac{64}{2^u}$. Specifically:

$$\text{NTA}_{new1} = 10 + (32 - 31) * 16 * \frac{64}{22} = 266(\text{Tc})$$

$$\text{NTA}_{new2} = 20 + (63 - 31) * 16 * \frac{64}{22} = 8212(\text{Tc}).$$

It is assumed here that the spacing of subcarrier is 60KHz (u = 2), Nf = 4096, Tc = 4.07ns.

When the terminal performs an uplink transmission to TRP1 according to the calculated TA adjustment amount, the terminal transmits a PUCCH in advance by $\text{NTA}_{new1}$ on the basis of downlink reception. When performing an uplink transmission to TRP2, the terminal transmits a PUCCH in advance by $\text{NTA}_{new2}$ on the basis of downlink reception.

In an embodiment of the present disclosure, the terminal reports capabilities and notifies the base station that the number of TA subgroups it can support is 2. The base station configures SRS resource set1 and SRS resource set2 through RRC. The rules predefined by the system are that adjustment is performed in odd-numbered slots with TA#1, which corresponds to a TA adjustment when uplink transmission is performed to TRP1, and adjustment is performed in even-numbered slots with TA#2, which corresponds to a TA adjustment when uplink transmission is performed to TRP2. In the n-th slot, the base station sends DCI, and indicates through an SRS resource set field in the DCI that PUSCH is transmitted to two TRPs at the same time. The number of repeated PUSCH transmissions is 4, with repeating pattern#1#2#1#2, which corresponds to that a beam used in the odd-numbered slot is indicated by an SRI1 field, and a beam used in the even-numbered slot is indicated by an SRI2 field, and corresponds to PUSCH information transmissions to TRP1 and TRP2. The base station sends an MAC CE indicating the updated TAs in the (n+3)-th slot, as shown in Table 7.

Table 7

| TA #1(32) |
|---|
| TA #2(63) |

The terminal receives the instruction from the base station and determines the two TAs to be 32 and 63 according to the predefined rules. The terminal performs calculation according to the following formula: $\text{NTA}_{\text{new}} = \text{NTA}_{\text{old}} + (\text{TA} - 31) * 16 * \frac{64}{2^{u'}}$. Specifically:

$$\text{NTA}_{new1} = 10 + (32 - 31) * 16 * \frac{64}{22} = 266(\text{Tc})$$

$$\text{NTA}_{new2} = 20 + (63 - 31) * 16 * \frac{64}{22} = 8212(\text{Tc}).$$

It is assumed here that the spacing of subcarrier is 60KHz (u = 2), Nf = 4096, Tc = 4.07ns.

When the terminal performs an uplink transmission to TRP1 in odd-numbered slots according to the calculated TA adjustment amount, the terminal transmits a PUSCH in advance by $NTA_{new1}$ on the basis of downlink reception. When performing an uplink transmission to TRP2 in even-numbered slots, the terminal transmits a PUSCH in advance by $NTA_{new2}$ on the basis of downlink reception.

In an embodiment of the present disclosure, the terminal obtains a channel configuration of RACH (Random Access Channel) during initial access, and determines time and frequency resources for transmitting the preamble for uplink access in a transmitting occasion (RO) of PRACH (Physical Random Access Channel) according to the channel configuration of RACH.

The terminal may obtain a PRACH index in the following manner: prach-ConfigurationIndex in SIB1->Uplink-ConfigCommon->initialUplinkBWP->RACH-ConfigCommon->RACH-ConfigGeneric.

The terminal may obtain the transmitting occasion in the following ways: through ssb-perRACH-OccasionAndCB-PreamblesPerSSB in RACH-ConfigCommon.

Afterwards, the terminal receives an RAR MAC (Medium Access Control) PDU (Protocol Data Unit) responded by the base station in RAR (Random Access Response) window (window). The TA command included in the RAR MAC PDU carries the TA-TA1 used for uplink synchronization.

The terminal calculates an absolute time adjustment (NTA) according to instructions in the TA command from the base station, and adjusts an uplink PUSCH (Physical Uplink Shared Channel) transmission carrying MSG3 on the basis of downlink reception timing, that is, transmitting MSG3 in advance of the NTA time on the basis of downlink reception of a PDSCH (Physical downlink shared channel).

The base station sends PDCCH (Physical downlink control channel) order (DCI format 1_0), instructing the terminal to transmit Preamble2 to TRP2. This process also includes: the base station sending signalings of other layer 1 and a higher layer, instructing the terminal to transmit an SRS by using a designated beam on designated time and frequency resources.

The base station receives the preamble 2 or the SRS transmitted by the terminal, and estimates TA-TA2 for an uplink transmission to the second TRP, or an offset between TA-TA2 and TA-TA1.

The offset between TA-TA2 and TA-TA1 may also be obtained by reporting from the terminal. Specifically, the terminal receives a downlink reference signal and estimates a difference of reception times of downlink signals from the two TRPs to obtain the offset, and the terminal transmits the obtained offset to the base station.

The base station instructs the terminal TA-TA1 and TA-TA2 when performing uplink transmissions. For the instruction manner, reference may be made to the description of the foregoing embodiments. Of course, the base station may also indicate one of the TAs and an offset between the two TAs.

The terminal receives TAs indicated by the base station and uses a corresponding TA value to adjust an uplink transmission time. The calculation and adjustment methods have the same principles as described in the forgoing embodiments.

It can be seen from the above description that the solution of the embodiments of the present disclosure solves the problem of uplink desynchronization caused by using the same TA to perform compensation for all TRPs, thereby compensating for the uplink performance loss.

The technical solution according to embodiments of the present disclosure may be applied to various systems, particularly to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (long term evolution advanced, UMTS), a worldwide interoperability for microwave access (worldwide interoperability for microwave access, WiMAX) system, and a 5G new radio (New Radio, NR) system. Each of the various systems includes a terminal and a network device. The systems may further include a core network portion, such as an evolved packet system (Evolved Packet System, EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CNs) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (access terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited herein. In some network architectures, the network device may include a centralized unit (centralized unit, CU) node and a distributed unit (distributed unit, DU) node, which may be geographically separated.

The network device and the terminal may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

As shown in FIG. 4, an information processing apparatus of an embodiment of the present disclosure is applied to network device, and includes:

a processor 400, configured to read a program in a memory 420 to perform the following processes: transmitting first indication information to a terminal, where the first indication information includes TAs corresponding to at least two TRPs, and the first indication information is used to determine TAs corresponding to at least two target TRPs; where different target TRPs correspond to different TAs; and
a transceiver 410, configured to receive and transmit data under the control of processor 400.

In FIG. 4, the bus architecture may include any number of interconnected buses and bridges, specifically one or more processors represented by processor 400 and various circuits of the memory represented by memory 420 are linked together. The bus architecture may also link various other circuits such as peripheral devices, voltage regulators, power management circuits, etc., which are well-known in the art, and therefore, no further descriptions are provided herein. The bus interface provides an interface. The transceiver 410 may be a plurality of elements, including a transmitter and a receiver, providing a unit for communicating with various other devices over a transmission medium. The processor 400 is responsible for managing the bus architecture and general processing, and the memory 420 can store data used by the processor 400 when performing operations.

The processor 400 may be a CPU (Central Processing Unit), ASIC (Application Specific Integrated Circuit), FPGA (Field-Programmable Gate Array) or CPLD (Complex Programmable Logic Device), and the processor can also adopt a multi-core architecture.

The processor 400 is responsible for managing the bus architecture and general processing, and the memory 420 may store data used by the processor 400 when performing operations.

The processor 400 is further configured to read the program to perform the following steps:

transmitting first information to a terminal, where the first information is used to indicate information of at least two timing advance subgroups (TASG); and
transmitting second information to the terminal, the second information, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,
the first information is indicated through a first target field in a PUSCH-Config.

Optionally, in a case where the first information is indicated through the first target field in the TCI State, the first information further includes an identifier of a non-serving cell.

Optionally, the processor 400 is further configured to read the computer program in the memory to perform the following operations: transmitting a higher-layer signaling to the terminal, where the second information is carried in a first target field of the higher-layer signaling.

Optionally, the processor 400 is further configured to read the computer program in the memory to perform the following operations: transmitting a higher-layer signaling to the terminal, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate an offset between the TAs and the reference TA.

Optionally, the TAs are indicated through a CORESETPoolIndex field in a control resource set pool where a physical downlink control channel (PDCCH) is located, and the PDCCH is used for scheduling a PDSCH; the processor 400 is further configured to read the computer program in the memory to perform the following operations:

transmitting third information to the terminal, where the third information is used to indicate information of at least two CORESETPoolIndexes; and
transmitting fourth information to the terminal, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the processor 400 is further configured to read the computer program in the memory to perform the following operations: transmitting a higher-layer signaling to the terminal, where the fourth information is carried in a second target field of the higher-layer signaling.

Optionally, the processor 400 is further configured to read the computer program in the memory to perform the following operations: determining one or more candidate TAs, where the TAs corresponding to the at least two TRPs are determined according to the one or more candidate TAs.

Optionally, the processor 400 is further configured to read the computer program in the memory to perform the following operations:

receiving an uplink reference signal transmitted by the terminal, and determining the one or more candidate TAs according to the uplink reference signal; or
receiving information of the one or more candidate TAs transmitted by the terminal, and determining the one or more candidate TAs according to the information of the one or more candidate TAs.

Optionally, the processor 400 is further configured to read the computer program in the memory to perform the following operations: receiving a second offset transmitted by a terminal, where the second offset is an offset between the one or more candidate TAs; and determining the one or more candidate TAs according to the uplink reference signal and the second offset.

It should be noted that the above apparatus provided in the embodiments of the present disclosure can implement all method steps implemented in the above method embodiments, and can achieve the same technical effects. Therefore, the description and the beneficial effect of these embodiments that are the same as the method embodiments will not be introduced here in detail.

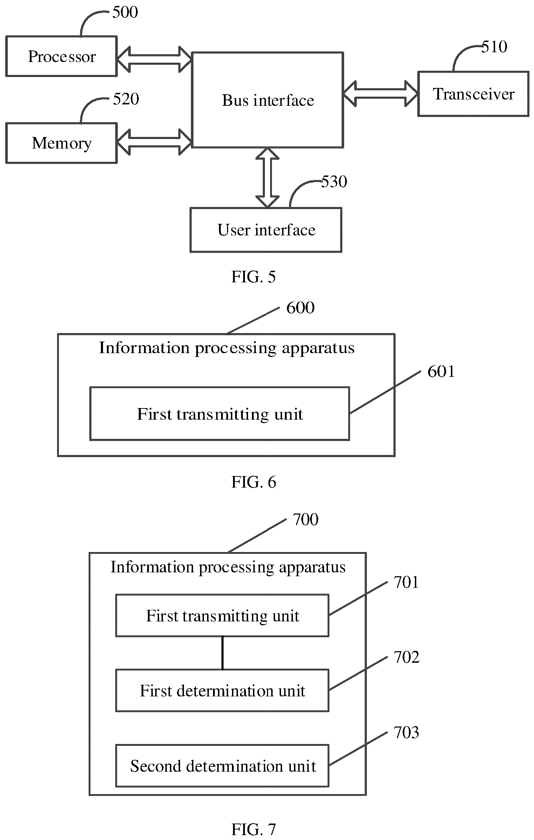

As shown in FIG. 5, an information processing apparatus of the embodiment of the present disclosure is applied to a terminal, and includes:

a processor 500, configured to read a program in a memory 520 to perform the following processes: receiving first indication information transmitted by a network device, where the first indication information is used to indicate TAs corresponding to at least two TRPs, and determining TAs corresponding to at least two target TRPs according to the first indication information; or, determining TAs corresponding to at least two target TRPs according to a predefined rule, where different target TRPs correspond to different TAs; and

a transceiver 510, configured to receive and transmit data under the control of processor 500.

In FIG. 5, the bus architecture may include any number of interconnected buses and bridges, specifically one or more processors represented by processor 500 and various circuits of the memory represented by memory 520 are linked together. The bus architecture may also link various other circuits such as peripheral devices, voltage regulators, power management circuits, etc., which are well-known in the art, and therefore, no further descriptions are provided herein. The bus interface provides an interface. The transceiver 510 may be a plurality of elements, that is, include a transmitter and a receiver, and provide a unit for communicating with various other devices on a transmission medium. For different user equipment, the user interface 530 may also be an interface capable of externally or internally connecting to required equipment. The connected equipment includes but not limited to a keypad, a display, a speaker, a microphone, a joystick, and the like.

The processor 500 is responsible for managing the bus architecture and general processing, and the memory 520 may store data used by the processor 500 when performing operations.

The processor 510 may be a CPU (Central Processing Unit), ASIC (Application Specific Integrated Circuit), FPGA (Field-Programmable Gate Array) or CPLD (Complex Programmable Logic Device), the processor can also adopt a multi-core architecture.

The processor is configured to execute any one of the methods provided in the embodiments of the present application according to the obtained executable instructions by invoking the computer program stored in the memory. The processor and the memory may also be physically separated.

Optionally, the processor 500 is further configured to read the computer program in the memory and perform the following operations:

transmitting second indication information to the network device, where the second indication information is used to indicate that the terminal has a capability to support multi-TA adjustment; or

transmitting third indication information to the network device, where the third indication information is used to indicate that the terminal has a capability to support multi-TA adjustment and a quantity of supported TASGs.

Optionally, the processor 500 is further configured to read the computer program in the memory and perform the following operations:

receiving first information transmitted by the network device, where the first information is used to indicate information of at least two TASGs; and

receiving second information transmitted by the network device, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

Optionally, the first information is indicated through a first target field in a TCI State; the processor 500 is further configured to read the computer program in the memory to perform the following operations. The determining the TAs corresponding to the at least two target TRPs according to the first indication information includes: determining the TAs corresponding to the at least two target TRPs according to the first target field in the TCI State and the second information.

Optionally, the first information is indicated through a first target field in PUCCH-SpatialRelationInfo; the processor 500 is further configured to read the computer program in the memory to perform the following operations. The determining the TAs corresponding to the at least two target TRPs according to the first indication information includes: determining the TAs corresponding to the at least two target TRPs according to the first target field in the PUCCH-SpatialRelationInfo and the second information.

Optionally, the first information is indicated through a first target field in an SRS resource set; the processor 500 is further configured to read the computer program in the memory to perform the following operations: determining the TAs corresponding to the at least two target TRPs according to the first target field in the SRS resource set and the second information.

Optionally, the first information is indicated through a first target field in a PUCCH-Resource, or the first information is indicated through a first target field in a PUSCH-Config; the processor 500 is further configured to read the computer program in the memory to perform the following operations:

in a case where the first information is indicated through the first target field in the PUCCH-Resource, determining the TAs corresponding to the at least two target TRPs according to the first target field in the PUCCH-Resource and the second information; or

in a case where the first information is indicated through the first target field in the PUSCH-Config, determining the TAs corresponding to the at least two target TRPs according to the first target field in the PUSCH-Config and the second information.

Optionally, the processor 500 is further configured to read the computer program in the memory to perform the following operations:

receiving a higher-layer signaling from the network device, where the second information is carried in a first target field of the higher-layer signaling; or

receiving a higher-layer signaling from the network device, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate an offset between the TAs and the reference TA.

Optionally, the TAs are indicated through a second target field in a control resource pool where a PDCCH is located, and the PDCCH is used for scheduling a PDSCH; the processor 500 is further configured to read the computer program in the memory to perform the following operations:

receiving third information transmitted by the network device, where the third information is used to indicate information of at least two CORESETPoolIndexes;

receiving fourth information transmitted by the network device, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

Optionally, the processor 500 is further configured to read the computer program in the memory to perform the following operations: determining the TAs corresponding to at least two target TRPs according to the CORESETPoolIndexes and the fourth information.

Optionally, the predefined rule includes a correspondence between transmission occasions and TRPs; the processor 500 is further configured to read the computer program in the memory to perform the following operations: determining the TAs corresponding to the at least two target TRPs according to the correspondence between transmission occasions and TRPs, and a correspondence between transmission occasions and TAs.

Optionally, the processor 500 is further configured to read the computer program in the memory to perform the following operations: transmitting information of one or more candidate TAs to the network device, to enable the network device to determine the TAs corresponding to the at least two TRPs according to the information of the one or more candidate TAs.

Optionally, the processor 500 is further configured to read the computer program in the memory to perform the following operations:

transmitting an uplink reference signal to the network device, where the uplink reference signal is used to determine the one or more candidate TAs; or

determining the information of the one or more candidate TAs and transmitting the information of the one or more candidate TAs to the network device.

Optionally, the processor 500 is further configured to read the computer program in the memory to perform the following operations: transmitting a second offset to the network device, where the second offset is an offset between the one or more candidate TAs.

Optionally, the processor 500 is further configured to read the computer program in the memory to perform the following operations: determining the information of the one or more candidate TAs according to a downlink receiving time difference.

It should be noted that the above apparatus provided in the embodiments of the present disclosure can implement all method steps implemented in the above method embodiments, and can achieve the same technical effects. Therefore, the description and the beneficial effect of these embodiments that are the same as the method embodiments will not be introduced here in detail.

As shown in FIG. 6, an information processing apparatus according to the embodiment of the present disclosure is applied to network device, and includes: a first transmitting unit 601, configured to transmit first indication information to a terminal, where the first indication information includes TAs corresponding to at least two TRPs, and the first indication information is used to determine TAs corresponding to at least two target TRPs; where different target TRPs correspond to different TAs.

Optionally, the first transmitting unit includes:

a first transmitting subunit, configured to transmit first information to the terminal, where the first information is used to indicate information of at least two timing advance subgroups (TASG);

a second transmitting subunit, configured to transmit second information to the terminal, where the second information is used to indicate respective TAs corresponding to the at least two TASGs, or the second information is used to indicate a reference TA, and first offsets between the TAs corresponding to the at least two TASGs and the reference TA,

where among the at least two TASGs, TAs corresponding to at least two TASGs are different, or first offsets of TAs corresponding to at least two TASGs are different.

Optionally, the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,
the first information is indicated through a first target field in a PUSCH-Config.

Optionally, in a case where the first information is indicated through the first target field in the TCI State, the first information further includes an identifier of a non-serving cell.

The second transmitting subunit is further configured to transmit a higher-layer signaling to the terminal, where the second information is carried in a first target field of the higher-layer signaling.

The second transmitting subunit is further configured to transmit a higher-layer signaling to the terminal, where the higher-layer signaling includes at least two TA commands, the at least two TA commands are used to indicate at least two TAs; or a first TA command of the at least two TA commands is used to indicate a reference TA, and a second TA command of the at least two TA commands is used to indicate an offset between the TAs and the reference TA.

The TAs are indicated through a second target field in a control resource set pool where a physical downlink control channel (PDCCH) is located, and the PDCCH is used for scheduling a PDSCH. The first transmitting unit includes:

a third transmitting subunit, configured to transmit third information to the terminal, where the third information is used to indicate information of at least two CORESETPoolIndexes; and

a fourth transmitting subunit, configured to transmit fourth information to the terminal, where the fourth information is used to indicate TAs corresponding to the information of the at least two CORESETPoolIndexes.

The fourth transmitting subunit is configured to: transmit a higher-layer signaling to the terminal, where the first information is carried in a second target field of the higher-layer signaling, and the fourth information is used to indicate a correspondence between the at least two CORESETPoolIndexes and TAs.

Optionally, the apparatus further includes: a first determination unit, configured to determine one or more candidate TAs, where the TAs corresponding to the at least two TRPs are determined according to the one or more candidate TAs.

Optionally, the first determination unit is configured to receive an uplink reference signal transmitted by the terminal, and determine the one or more candidate TAs according to the uplink reference signal; or receive information of the one or more candidate TAs transmitted by the terminal, and determine the one or more candidate TAs according to the information of the one or more candidate TAs.

Optionally, the apparatus further includes: a first receiving unit, configured to receive a second offset transmitted by a terminal, where the second offset is an offset between the one or more candidate TAs; the first determination unit is further configured to determine the one or more candidate TAs according to the uplink reference signal and the second offset.

It should be noted that the above apparatus provided in the embodiments of the present disclosure can implement all method steps implemented in the above method embodiments, and can achieve the same technical effects. Therefore, the description and the beneficial effect of these embodiments that are the same as the method embodiments will not be introduced here in detail.

As shown in FIG. 7, the information processing apparatus according to the embodiment of the present disclosure is applied to a terminal and includes:

a first receiving unit 701, configured to receive first indication information transmitted by a network device, where the first indication information is used to indicate TAs corresponding to at least TRPs, and a first determination unit 702, configured to determine TAs corresponding to at least two target TRPs according to the first indication information; or a second determination unit 703, configured to determine TAs corresponding to at least two target TRPs according to a predefined rule, where different target TRPs correspond to different TAs.

The apparatus may also include: a first transmitting unit, configured to:

transmit second indication information to the network device, where the second indication information is used to indicate that the terminal has a capability to support multi-TA adjustment; or
transmit third indication information to the network device, where the third indication information is used to indicate that the terminal has a capability to support multi-TA adjustment and a quantity of supported TASGs

The first receiving unit includes:

a first receiving subunit, configured to receive first information transmitted by the network device, where the first information is used to indicate information of at least two TASGs; and
a second receiving subunit, configured to receive second information transmitted by the network device, where the second information is used to indicate respective TAs corresponding to the at least two TASGs, or the second information is used to indicate a reference TA, and first offsets between the TAs corresponding to the at least two TASGs and the reference TA, where among the at least two TASGs, TAs corresponding to at least two TASGs are different, or first offsets of TAs corresponding to at least two TASGs are different.

The first information is indicated through a first target field in a TCI State; the first determination unit is configured to determine the TAs corresponding to the at least two target TRPs according to the first target field in the TCI State and the second information.
The first information is indicated through a first target field in PUCCH-SpatialRelationInfo; the first determination unit is configured to determine the TAs corresponding to the at least two target TRPs according to the first target field in the PUCCH-SpatialRelationInfo and the second information.
The first information is indicated through a first target field in an SRS resource set; the first determination unit is configured to determine the TAs corresponding to the at least two target TRPs according to the first target field in the SRS resource set and the second information.
Optionally, the first information is indicated by a first target field in a PUCCH-Resource, or the first information is indicated by a first target field in a PUSCH-Config; the first determination unit is configured to: determine the TAs corresponding to the at least two target TRPs according to the first target field and the second information in the PUCCH-Resource in a case where the first information is indicated through the first target field in the PUCCH-Resource; or determine the TAs corresponding to the at least two target TRPs according to the first target field in the PUSCH-Config and the second information in a case where the first information is indicated through the first target field in the PUSCH-Config.
The second receiving subunit is configured to: receive a higher-layer signaling from the network device, where the second information is carried in a first target field of the higher-layer signaling; or receive a higher-layer signaling from the network device, where the higher-layer signaling includes at least two TA commands, and the at least two TA commands are used to indicate at least two TAs.
The TAs are indicated through a second target field in a control resource pool where a PDCCH is located, and the PDCCH is used to schedule a PDSCH; the first receiving unit includes:

a third receiving subunit, configured to receive third information transmitted by the network device, where the third information is used to indicate information of at least two CORESETPoolIndexes; and
a fourth receiving subunit, configured to receive fourth information transmitted by the network device, where the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

The first determination unit is configured to determine the TAs corresponding to at least two target TRPs according to the second target field and the fourth information; and the second target field is carried in a higher-layer signaling.
The predefined rule includes a correspondence between transmission occasions and TRPs; and the second determination unit is configured to determine the TAs corresponding to the at least two target TRPs according to the correspondence between transmission occasions and TRPs, and a correspondence between transmission occasions and TAs.

Optionally, the apparatus further includes: a second transmitting unit, configured to transmit information of one or more candidate TAs to the network device, to enable the network device to determine the TAs corresponding to the at least two TRPs according to the information of the one or more candidate TAs.

The second transmitting unit is configured to: transmit an uplink reference signal to the network device, where the uplink reference signal is used to determine the one or more candidate TAs; or determine the information of the one or more candidate TAs and transmit the information of the one or more candidate TAs to the network device.

Optionally, the apparatus further includes: a third transmitting unit, configured to transmit a second offset to the network device, where the second offset is an offset between the one or more candidate TAs.

Optionally, the second transmitting unit is further configured to determine the information of the one or more candidate TAs according to a downlink receiving time difference.

It should be noted that the above apparatus provided in the embodiment of the present disclosure can implement all method steps implemented in the above method embodiments, and can achieve the same technical effects. Therefore, the description and the beneficial effect of this embodiment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) to execute part or all of the steps of the methods described in the various embodiments of the present disclosure. The aforementioned storage media include: universal serial bus (USB) flash drive, removable hard disk, ROM (Read-Only Memory, ROM), RAM (Random Access Memory, RAM), magnetic disk, optical disc or other media that can store program codes.

An embodiment of the present disclosure further provides a processor readable storage medium. The processor readable storage medium stores a computer program, and the computer program is configured to enable a processor to execute steps in the above-mentioned information processing method, and can achieve the same technical effects, which will not be described herein, to avoid repetition. The processor readable storage medium may be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid state disk (SSD)), etc.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of the present disclosure.

The embodiments of the present disclosure are described above with reference to the accompanying drawings. However, the present disclosure is not limited to the foregoing specific embodiments. The foregoing specific embodiments are merely illustrative rather than restrictive. As instructed by the present disclosure, persons of ordinary skill in the art may develop many other forms without departing from principles of the present disclosure and the protection scope of the claims, and all such forms shall fall within the protection scope of the present disclosure.

**Claims**

1. An information processing method, comprising:

   receiving, by an terminal, first indication information transmitted by a network device, wherein the first indication information is used to indicate timing advances (TAs) corresponding to at least two transmission and reception points (TRPs), and determining, by the terminal, TAs corresponding to at least two target TRPs according to the first indication information; or,
   determining, by the terminal, TAs corresponding to at least two target TRPs according to a predefined rule, wherein different target TRPs correspond to different TAs.

2. The method according to claim 1, wherein before receiving, by the terminal, the first indication information transmitted by the network device, the method further comprises:

   transmitting, by the terminal, second indication information to the network device, wherein the second indication information is used to indicate that the terminal has a capability to support multi-TA adjustment; or
   transmitting, by the terminal, third indication information to the network device, wherein the third indication information is used to indicate that the terminal has a capability to support multi-TA adjustment and a quantity of supported timing advance subgroups (TASGs).

3. The method according to claim 1, wherein the receiving, by the terminal, the first indication information transmitted by the network device comprises:

   receiving, by the terminal, first information transmitted by the network device, wherein the first information is used to indicate information of at least two TASGs; and
   receiving, by the terminal, second information transmitted by the network device, wherein the second information is used to indicate respective TAs corresponding to the at least two TASGs, or the second information is used to indicate a reference TA, and first offsets between the TAs corresponding to the at least two TASGs and the reference TA,
   wherein among the at least two TASGs, TAs corresponding to at least two TASGs are different, or first offsets of TAs corresponding to at least two TASGs are different.

4. The method according to claim 3, wherein the first information is indicated through a first target field in a transmission configuration indicator state (TCI State);
   the determining, by the terminal, the TAs corresponding to the at least two target TRPs according to the first indication information comprises:
   determining, by the terminal, the TAs corresponding to the at least two target TRPs according to the first target field in the TCI State and the second information.

5. The method according to claim 3, wherein the first information is indicated through a first target field in physical uplink control channel spatial relation information (PUCCH-SpatialRelationInfo);
   the determining, by the terminal, the TAs corresponding to the at least two target TRPs according to the first indication information comprises:
   determining, by the terminal, the TAs corresponding to the at least two target TRPs according to the first target field in the PUCCH-SpatialRelationInfo and the second information.

6. The method according to claim 3, wherein the first information is indicated through a first target field in a sounding reference signal resource set (SRS resource set);
   the determining, by the terminal, the TAs corresponding to the at least two target TRPs according to the first indication information comprises:
   determining, by the terminal, the TAs corresponding to the at least two target TRPs according to the first target field in the SRS resource set and the second information.

7. The method according to claim 3, wherein the first information is indicated through a first target field in a PUCCH resource (PUCCH-Resource), or the first information is indicated through a first target field in a physical uplink shared channel (PUSCH) configuration (PUSCH-Config);
   the determining, by the terminal, the TAs corresponding to the at least two target TRPs according to the first indication information comprises:

in a case where the first information is indicated through the first target field in the PUCCH-Resource, determining, by the terminal, the TAs corresponding to the at least two target TRPs according to the first target field in the PUCCH-Resource and the second information; or

in a case where the first information is indicated through the first target field in the PUSCH-Config, determining, by the terminal, the TAs corresponding to the at least two target TRPs according to the first target field in the PUSCH-Config and the second information.

8. The method according to claim 3, wherein the receiving, by the terminal, the second indication information transmitted by the network device comprises:

receiving, by the terminal, a higher-layer signaling from the network device, wherein the second information is carried in a first target field of the higher-layer signaling; or

receiving, by the terminal, a higher-layer signaling from the network device, wherein the higher-layer signaling comprises at least two TA commands, the at least two TA commands are used to indicate at least two TAs; or a first TA command of the at least two TA commands is used to indicate a reference TA, and a second TA command of the at least two TA commands is used to indicate offsets between the TAs.

9. The method according to claim 1, wherein the TAs are indicated through a second target field in a control resource set pool where a physical downlink control channel (PDCCH) is located, and the PDCCH is used for scheduling a physical downlink shared channel (PDSCH);

the receiving, by the terminal, the first indication information transmitted by the network device comprises:

receiving, by the terminal, third information transmitted by the network device, wherein the third information is used to indicate information of at least two control resource set pool indexes (CORESETPoolIndex); and

receiving, by the terminal, fourth information transmitted by the network device, wherein the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

10. The method according to claim 9, wherein the determining, by the terminal, the TAs corresponding to the at least two target TRPs according to the first indication information comprises:
determining, by the terminal, the TAs corresponding to the at least two target TRPs according to the second target field and the fourth information.

11. The method according to claim 9 or 10, wherein the second target field is carried in a higher-layer signaling.

12. The method according to claim 1, wherein the predefined rule comprises a correspondence between transmission occasions and TRPs;
the determining, by the terminal, the TAs corresponding to the at least two target TRPs according to the predefined rule comprises:
determining, by the terminal, the TAs corresponding to the at least two target TRPs according to the correspondence between transmission occasions and TRPs, and a correspondence between transmission occasions and TAs.

13. The method according to claim 1, further comprising:
transmitting, by the terminal, information of one or more candidate TAs to the network device, to enable the network device to determine the TAs corresponding to the at least two TRPs according to the information of the one or more candidate TAs.

14. The method according to claim 13, wherein the transmitting, by the terminal, the information of the one or more candidate TAs to the network device comprises:

transmitting, by the terminal, an uplink reference signal to the network device, wherein the uplink reference signal is used to determine the one or more candidate TAs; or

determining, by the terminal, the information of the one or more candidate TAs and transmitting the information of the one or more candidate TAs to the network device.

15. The method according to claim 14, further comprising:
transmitting, by the terminal, a second offset to the network device, wherein the second offset is an offset between the one or more candidate TAs.

16. The method according to claim 14, wherein the determining, by the terminal, the information of the one or more candidate TAs comprises:
    determining, by the terminal, the information of the one or more candidate TAs according to a downlink receiving time difference.

17. An information processing method, comprising:
    transmitting, by a network device, first indication information to a terminal, wherein the first indication information comprises timing advances (TAs) corresponding to at least two transmission and reception points (TRPs), and the first indication information is used to determine TAs corresponding to at least two target TRPs; wherein different target TRPs correspond to different TAs.

18. The method according to claim 17, wherein the transmitting, by the network device, the first indication information to the terminal comprises:

    transmitting, by the network device, first information to the terminal, wherein the first information is used to indicate information of at least two timing advance subgroups (TASG); and
    transmitting, by the network device, second information to the terminal, wherein the second information is used to indicate respective TAs corresponding to the at least two TASGs, or the second information is used to indicate a reference TA, and first offsets between the TAs corresponding to the at least two TASGs and the reference TA, wherein among the at least two TASGs, TAs corresponding to at least two TASGs are different, or first offsets of TAs corresponding to at least two TASGs are different.

19. The method according to claim 18, wherein the first information is indicated by one or more of the following ways:

    the first information is indicated through a first target field in a transmission configuration indicator state (TCI State);
    the first information is indicated through a first target field in physical uplink control channel spatial relation information (PUCCH-SpatialRelationInfo);
    the first information is indicated through a first target field in a reference signal resource set (SRS resource set);
    the first information is indicated through a first target field in a PUCCH resource (PUCCH-Resource); or,
    the first information is indicated through a first target field in a physical uplink shared channel (PUSCH) configuration (PUSCH-Config).

20. The method according to claim 19, wherein in a case where the first information is indicated through the first target field in the TCI State, the first information further comprises an identifier of a non-serving cell.

21. The method according to claim 19, wherein the transmitting, by the network device, the second information to the terminal comprises:
    transmitting, by the network device, a higher-layer signaling to the terminal, wherein the second information is carried in a first target field of the higher-layer signaling.

22. The method according to claim 18, wherein the transmitting, by the network device, the second information to the terminal comprises:
    transmitting, by the network device, a higher-layer signaling to the terminal, wherein the higher-layer signaling comprises at least two TA commands, the at least two TA commands are used to indicate at least two TAs; or a first TA command of the at least two TA commands is used to indicate a reference TA, and a second TA command of the at least two TA commands is used to indicate offsets between the TAs.

23. The method according to claim 17, wherein the TAs are indicated through a second target field in a control resource set pool where a physical downlink control channel (PDCCH) is located, and the PDCCH is used for scheduling a physical downlink shared channel (PDSCH);
    the transmitting, by the network device, the first indication information to the terminal comprises:

    transmitting, by the network device, third information to the terminal, wherein the third information is used to indicate information of at least two CORESETPoolIndexes; and
    transmitting, by the network device, fourth information to the terminal, wherein the fourth information is used to indicate TAs corresponding to the at least two CORESETPoolIndexes; or the fourth information is used to indicate a reference TA, and first offsets between the TAs corresponding to the at least two CORESETPoolIndexes and the reference TA.

24. The method according to claim 23, wherein the transmitting, by the network device, the fourth information to the terminal comprises:
transmitting, by the network device, a higher-layer signaling to the terminal, wherein the fourth information is carried in a second target field of the higher-layer signaling.

25. The method according to claim 17, further comprising:
determining, by the network device, one or more candidate TAs, wherein the TAs corresponding to the at least two TRPs are determined according to the one or more candidate TAs.

26. The method according to claim 25, wherein the determining, by the network device, the one or more candidate TAs comprises:

receiving, by the network device, an uplink reference signal transmitted by the terminal, and determining the one or more candidate TAs according to the uplink reference signal; or
receiving, by the network device, information of the one or more candidate TAs transmitted by the terminal, and determining the one or more candidate TAs according to the information of the one or more candidate TAs.

27. The method according to claim 26, further comprising:

receiving, by the network device, a second offset transmitted by the terminal, wherein the second offset is an offset between the one or more candidate TAs;
the determining, by the network device, the one or more candidate TAs according to the uplink reference signal comprises:
determining, by the network device, the one or more candidate TAs according to the uplink reference signal and the second offset.

28. An information processing apparatus, applied to a network device, comprising a memory, a transceiver and a processor,
wherein the memory is configured to store a computer program; the transceiver is configured to transmit and receive data under the control of the processor; the processor is configured to read the computer program in the memory to perform the following operations:
transmitting first indication information to a terminal, wherein the first indication information comprises TAs corresponding to at least two TRPs, and the first indication information is used for determining TAs corresponding to at least two target TRPs, wherein different target TRPs correspond to different TAs.

29. The apparatus according to claim 28, wherein the processor is further configured to read the computer program in the memory to perform the following operations:

transmitting first information to a terminal, wherein the first information is used to indicate information of at least two timing advance subgroups (TASG); and
transmitting second information to the terminal, the second information, wherein the second information is used to indicate respective TAs corresponding to the at least two TASGs, or the second information is used to indicate a reference TA, and first offsets between the TAs corresponding to the at least two TASGs and the reference TA, wherein among the at least two TASGs, TAs corresponding to at least two TASGs are different, or first offsets of TAs corresponding to at least two TASGs are different.

30. The apparatus according to claim 29, wherein the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,
the first information is indicated through a first target field in a PUSCH-Config.

31. The apparatus according to claim 30, wherein in a case where the first information is indicated through the first target field in the TCI State, the first information further comprises an identifier of a non-serving cell.

32. The apparatus according to claim 29, wherein the processor is further configured to read the computer program in the memory to perform the following operations:
transmitting a higher-layer signaling to the terminal, wherein the second information is carried in a first target field of the higher-layer signaling.

33. The apparatus according to claim 29, wherein the processor is further configured to read the computer program in the memory to perform the following operations:
transmitting a higher-layer signaling to the terminal, wherein the higher-layer signaling comprises at least two TA commands, the at least two TA commands are used to indicate at least two TAs; or a first TA command of the at least two TA commands is used to indicate a reference TA, and a second TA command of the at least two TA commands is used to indicate offsets between the TAs.

34. The apparatus according to claim 28, wherein the TAs are indicated through a second target field in a control resource set pool where a physical downlink control channel (PDCCH) is located, and the PDCCH is used for scheduling a PDSCH; the processor is further configured to read the computer program in the memory to perform the following operations:

transmitting third information to the terminal, wherein the third information is used to indicate information of at least two CORESETPoolIndexes; and
transmitting fourth information to the terminal, wherein the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

35. The apparatus according to claim 34, wherein the processor is further configured to read the computer program in the memory to perform the following operations:
transmitting a higher-layer signaling to the terminal, wherein the fourth information is carried in a second target field of the higher-layer signaling.

36. The apparatus according to claim 28, wherein the processor is further configured to read the computer program in the memory to perform the following operations:
determining one or more candidate TAs, wherein the TAs corresponding to the at least two TRPs are determined according to the one or more candidate TAs.

37. The apparatus according to claim 36, wherein the processor is further configured to read the computer program in the memory to perform the following operations:

receiving an uplink reference signal transmitted by the terminal, and determining the one or more candidate TAs according to the uplink reference signal; or
receiving information of the one or more candidate TAs transmitted by the terminal, and determining the one or more candidate TAs according to the information of the one or more candidate TAs.

38. An information processing apparatus, applied to a terminal, comprising a memory, a transceiver and a processor, wherein the memory is configured to store a computer program; the transceiver is configured to transmit and receive data under the control of the processor; the processor is configured to read the computer program in the memory to perform the following operations:

receiving first indication information transmitted by a network device, wherein the first indication information is used to indicate TAs corresponding to at least two TRPs, and determining TAs corresponding to at least two target TRPs according to the first indication information; or,
determining TAs corresponding to at least two target TRPs according to a predefined rule,
wherein different target TRPs correspond to different TAs.

39. The apparatus according to claim 38, wherein the processor is further configured to read the computer program in the memory to perform the following operations:

transmitting second indication information to the network device, wherein the second indication information is used to indicate that the terminal has a capability to support multi-TA adjustment; or

transmitting third indication information to the network device, wherein the third indication information is used to indicate that the terminal has a capability to support multi-TA adjustment and a quantity of supported TASGs.

40. The apparatus according to claim 39, wherein the processor is further configured to read the computer program in the memory to perform the following operations:

receiving first information transmitted by the network device, wherein the first information is used to indicate information of at least two TASGs; and

receiving second information transmitted by the network device, wherein the second information is used to indicate respective TAs corresponding to the at least two TASGs, or the second information is used to indicate a reference TA, and first offsets between the TAs corresponding to the at least two TASGs and the reference TA, wherein among the at least two TASGs, TAs corresponding to at least two TASGs are different, or first offsets of TAs corresponding to at least two TASGs are different.

41. The apparatus according to claim 40, wherein the first information is indicated through a first target field in a TCI State; the processor is further configured to read the computer program in the memory to perform the following operations: the determining the TAs corresponding to the at least two target TRPs according to the first indication information comprises:

determining the TAs corresponding to the at least two target TRPs according to the first target field in the TCI State and the second information.

42. The apparatus according to claim 40, wherein the first information is indicated through a first target field in PUCCH-SpatialRelationInfo; the processor is further configured to read the computer program in the memory to perform the following operations:

the determining the TAs corresponding to the at least two target TRPs according to the first indication information comprises:

determining the TAs corresponding to the at least two target TRPs according to the first target field in the PUCCH-SpatialRelationInfo and the second information.

43. The apparatus according to claim 40, wherein the first information is indicated through a first target field in an SRS resource set; the processor is further configured to read the computer program in the memory to perform the following operations:

determining the TAs corresponding to the at least two target TRPs according to the first target field in the SRS resource set and the second information.

44. The apparatus according to claim 40, wherein the first information is indicated through a first target field in a PUCCH-Resource, or the first information is indicated through a first target field in a PUSCH-Config; the processor is further configured to read the computer program in the memory to perform the following operations:

in a case where the first information is indicated through the first target field in the PUCCH-Resource, determining the TAs corresponding to the at least two target TRPs according to the first target field in the PUCCH-Resource and the second information; or

in a case where the first information is indicated through the first target field in the PUSCH-Config, determining the TAs corresponding to the at least two target TRPs according to the first target field in the PUSCH-Config and the second information.

45. The apparatus according to claim 40, wherein the processor is further configured to read the computer program in the memory to perform the following operations:

receiving a higher-layer signaling from the network device, wherein the second information is carried in a first target field of the higher-layer signaling; or

receiving a higher-layer signaling from the network device, wherein the higher-layer signaling comprises at least two TA commands, the at least two TA commands are used to indicate at least two TAs; or a first TA command of the at least two TA commands is used to indicate a reference TA, and a second TA command of the at least two TA commands is used to indicate offsets between the TAs.

46. The apparatus according to claim 38, wherein the TAs are indicated through a second target field in a control resource pool where a PDCCH is located, and the PDCCH is used for scheduling a PDSCH; the processor is further configured to read the computer program in the memory to perform the following operations:

receiving third information transmitted by the network device, wherein the third information is used to indicate information of at least two CORESETPoolIndexes;
receiving fourth information transmitted by the network device, wherein the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

47. The apparatus according to claim 46, wherein the processor is further configured to read the computer program in the memory to perform the following operations:
determining the TAs corresponding to the at least two target TRPs according to the second target field and the fourth information.

48. The apparatus according to claim 38, wherein the predefined rule comprises a correspondence between transmission occasions and TRPs; the processor is further configured to read the computer program in the memory to perform the following operations:
determining the TAs corresponding to the at least two target TRPs according to the correspondence between transmission occasions and TRPs, and a correspondence between transmission occasions and TAs.

49. The apparatus according to claim 38, wherein the processor is further configured to read the computer program in the memory to perform the following operations:
transmitting information of one or more candidate TAs to the network device, to enable the network device to determine the TAs corresponding to the at least two TRPs according to the information of the one or more candidate TAs.

50. The apparatus according to claim 49, wherein the processor is further configured to read the computer program in the memory to perform the following operations:

transmitting an uplink reference signal to the network device, wherein the uplink reference signal is used to determine the one or more candidate TAs; or
determining the information of the one or more candidate TAs and transmitting the information of the one or more candidate TAs to the network device.

51. An information processing apparatus, applied to a network device, comprising:
a first transmitting unit, configured to transmit first indication information to a terminal, wherein the first indication information comprises TAs corresponding to at least two TRPs, and the first indication information is used to determine TAs corresponding to at least two target TRPs; wherein different target TRPs correspond to different TAs.

52. The apparatus according to claim 51, wherein the first transmitting unit comprises:

a first transmitting subunit, configured to transmit first information to the terminal, wherein the first information is used to indicate information of at least two timing advance subgroups (TASG);
a second transmitting subunit, configured to transmit second information to the terminal, wherein the second information is used to indicate respective TAs corresponding to the at least two TASGs, or the second information is used to indicate a reference TA, and first offsets between the TAs corresponding to the at least two TASGs and the reference TA,
wherein among the at least two TASGs, TAs corresponding to at least two TASGs are different, or first offsets of TAs corresponding to at least two TASGs are different.

53. The apparatus according to claim 52, wherein the first information is indicated by one or more of the following ways:

the first information is indicated through a first target field in a TCI State;
the first information is indicated through a first target field in PUCCH-SpatialRelationInfo;
the first information is indicated through a first target field in an SRS resource set;
the first information is indicated through a first target field in a PUCCH-Resource; or,

the first information is indicated through a first target field in a PUSCH-Config.

54. The apparatus according to claim 53, wherein in a case where the first information is indicated through the first target field in the TCI State, the first information further comprises an identifier of a non-serving cell.

55. The apparatus according to claim 52, wherein the second transmitting subunit is further configured to transmit a higher-layer signaling to the terminal, wherein the second information is carried in a first target field of the higher-layer signaling.

56. The apparatus according to claim 52, wherein the second transmitting subunit is further configured to transmit a higher-layer signaling to the terminal, wherein the higher-layer signaling comprises at least two TA commands, the at least two TA commands are used to indicate at least two TAs; or a first TA command of the at least two TA commands is used to indicate a reference TA, and a second TA command of the at least two TA commands is used to indicate offsets between the TAs.

57. The apparatus according to claim 51, wherein the TAs are indicated through a second target field in a control resource set pool where a physical downlink control channel (PDCCH) is located, and the PDCCH is used for scheduling a PDSCH;
wherein the first transmitting unit comprises:

a third transmitting subunit, configured to transmit third information to the terminal, wherein the third information is used to indicate information of at least two CORESETPoolIndexes; and
a fourth transmitting subunit, configured to transmit fourth information to the terminal, wherein the fourth information is used to indicate TAs corresponding to the information of the at least two CORESETPoolIndexes.

58. The apparatus according to claim 57, wherein the fourth transmitting subunit is configured to:
transmit a higher-layer signaling to the terminal, wherein the first information is carried in a second target field of the higher-layer signaling, and the fourth information is used to indicate a correspondence between the at least two CORESETPoolIndexes and TAs.

59. The apparatus according to claim 51, further comprising:
a first determination unit, configured to determine one or more candidate TAs, wherein the TAs corresponding to the at least two TRPs are determined according to the one or more candidate TAs.

60. The apparatus according to claim 59, wherein the first determination unit is configured to receive an uplink reference signal transmitted by the terminal, and determine the one or more candidate TAs according to the uplink reference signal; or
receive information of the one or more candidate TAs transmitted by the terminal, and determine the one or more candidate TAs according to the information of the one or more candidate TAs.

61. The apparatus according to claim 51, further comprising:
a first receiving unit, configured to receive a second offset transmitted by a terminal, wherein the second offset is an offset between the one or more candidate TAs; the first determination unit is further configured to determine the one or more candidate TAs according to the uplink reference signal and the second offset.

62. An information processing apparatus, applied to a terminal, comprising:

a first receiving unit, configured to receive first indication information transmitted by a network device, wherein the first indication information is used to indicate TAs corresponding to at least TRPs, and a first determination unit, configured to determine TAs corresponding to at least two target TRPs according to the first indication information; or
a second determination unit, configured to determine TAs corresponding to at least two target TRPs according to a predefined rule,
wherein different target TRPs correspond to different TAs.

63. The apparatus according to claim 62, further comprising a first transmitting unit, configured to:

transmit second indication information to the network device, wherein the second indication information is used to indicate that the terminal has a capability to support multi-TA adjustment; or

transmit third indication information to the network device, wherein the third indication information is used to indicate that the terminal has a capability to support multi-TA adjustment and a quantity of supported TASGs.

64. The apparatus according to claim 62, wherein the first receiving unit comprises:

a first receiving subunit, configured to receive first information transmitted by the network device, wherein the first information is used to indicate information of at least two TASGs; and

a second receiving subunit, configured to receive second information transmitted by the network device, wherein the second information is used to indicate respective TAs corresponding to the at least two TASGs, or the second information is used to indicate a reference TA, and first offsets between the TAs corresponding to the at least two TASGs and the reference TA,

wherein among the at least two TASGs, TAs corresponding to at least two TASGs are different, or first offsets of TAs corresponding to at least two TASGs are different.

65. The apparatus according to claim 64, wherein the first information is indicated through a first target field in a TCI State; the first determination unit is configured to determine the TAs corresponding to the at least two target TRPs according to the first target field in the TCI State and the second information.

66. The apparatus according to claim 64, wherein the first information is indicated through a first target field in PUCCH-SpatialRelationInfo; the first determination unit is configured to determine the TAs corresponding to the at least two target TRPs according to the first target field in the PUCCH-SpatialRelationInfo and the second information.

67. The apparatus according to claim 64, wherein the first information is indicated through a first target field in an SRS resource set; the first determination unit is configured to determine the TAs corresponding to the at least two target TRPs according to the first target field in the SRS resource set and the second information.

68. The apparatus according to claim 64, wherein the first information is indicated by a first target field in a PUCCH-Resource, or the first information is indicated by a first target field in a PUSCH-Config; the first determination unit is configured to: determine the TAs corresponding to the at least two target TRPs according to the first target field and the second information in the PUCCH-Resource in a case where the first information is indicated through the first target field in the PUCCH-Resource; or determine the TAs corresponding to the at least two target TRPs according to the first target field in the PUSCH-Config and the second information in a case where the first information is indicated through the first target field in the PUSCH-Config.

69. The apparatus according to claim 64, wherein the second receiving subunit is configured to: receive a higher-layer signaling from the network device, wherein the second information is carried in a first target field of the higher-layer signaling; or receive a higher-layer signaling from the network device, wherein the higher-layer signaling comprises at least two TA commands, and the at least two TA commands are used to indicate at least two TAs.

70. The apparatus according to claim 62, wherein the TAs are indicated through a second target field in a control resource pool where a PDCCH is located, and the PDCCH is used to schedule a PDSCH; the first receiving unit comprises:

a third receiving subunit, configured to receive third information transmitted by the network device, wherein the third information is used to indicate information of at least two CORESETPoolIndexes; and

a fourth receiving subunit, configured to receive fourth information transmitted by the network device, wherein the fourth information is used to indicate TAs corresponding to at least two CORESETPoolIndexes; or the fourth information is used to indicate a reference TA, and first offsets between the TAs corresponding to the at least two CORESETPoolIndexes and the reference TA.

71. The apparatus according to claim 70, wherein the first determination unit is configured to determine the TAs corresponding to at least two target TRPs according to the second target field and the fourth information; and the second target field is carried in a higher-layer signaling.

72. The apparatus according to claim 62, wherein the predefined rule comprises a correspondence between transmission occasions and TRPs; and the second determination unit is configured to determine the TAs corresponding to the at least two target TRPs according to the correspondence between transmission occasions and TRPs, and a correspondence between transmission occasions and TAs.

**73.** The apparatus according to claim 62, further comprising:
a second transmitting unit, configured to transmit information of one or more candidate TAs to the network device, to enable the network device to determine the TAs corresponding to the at least two TRPs according to the information of the one or more candidate TAs.

**74.** The apparatus according to claim 73, wherein the second transmitting unit is configured to: transmit an uplink reference signal to the network device, wherein the uplink reference signal is used to determine the one or more candidate TAs; or determine the information of the one or more candidate TAs and transmit the information of the one or more candidate TAs to the network device.

**75.** The apparatus according to claim 62, further comprising:
a third transmitting unit, configured to transmit a second offset to the network device, wherein the second offset is an offset between the one or more candidate TAs.

**76.** The apparatus according to claim 73, wherein the second transmitting unit is further configured to determine the information of the one or more candidate TAs according to a downlink receiving time difference.

**77.** A processor-readable storage medium, storing a computer program, wherein the computer program is configured to cause a processor to perform the method according to any one of claims 1 to 16, or to perform the method according to any one of claims 17 to 27.

FIG. 1

Start

Transmitting, by a network device, indication information to a terminal, wherein the indication information includes TAs corresponding to the at least two TRPs, and is used to trigger the terminal to determine TAs corresponding to at least two target TRPs according to the indication information

201

End

FIG. 2

Start

Receiving, by a terminal, indication information transmitted by a network device, wherein the indication information is used to indicate TAs corresponding to at least two TRPs; determining, by the terminal, TAs corresponding to at least two target TRPs according to the indication information; or,
determining, by the terminal, TAs corresponding to at least two target TRPs according to a predefined rule

301

End

FIG. 3

400

Processor

420

Memory

Bus interface

410

Transceiver

FIG. 4

500

Processor

Bus interface

520

Memory

530

User interface

510

Transceiver

FIG. 5

600

Information processing apparatus

601

First transmitting unit

FIG. 6

700

Information processing apparatus

701

First transmitting unit

702

First determination unit

703

Second determination unit

FIG. 7

## INTERNATIONAL SEARCH REPORT

| International application No. |
| --- |
| **PCT/CN2023/080017** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

3GPP, CNTXT, ENTXTC, VEN: 多个, 时间, 提前, 发送, 接收, 能力, 定时, 偏移量, TA, TRP, TASG, SRS, PUCCH, TCI, capability, ability, offset

**C. DOCUMENTS CONSIDERED TO BE RELEVANT**

| Category* | Citation of document, with indication, where appropriate, of the relevant passages | Relevant to claim No. |
| --- | --- | --- |
| X | CN 114071690 A (VIVO COMMUNICATION TECHNOLOGY CO., LTD.) 18 February 2022 (2022-02-18) <br> description, paragraphs 65-238 | 1-77 |
| X | WO 2021062764 A1 (HUAWEI TECHNOLOGIES CO., LTD.) 08 April 2021 (2021-04-08) <br> description, paragraphs 6-71 | 1-77 |
| A | CN 109089309 A (VIVO COMMUNICATION TECHNOLOGY CO., LTD.) 25 December 2018 (2018-12-25) <br> entire document | 1-77 |
| A | SAMSUNG. "Discussions on NR UL multi-panel/multi-TRP" <br> *3GPP TSG RAN WG1 NR Ad-Hoc#2 R1-1710648,* 30 June 2017 (2017-06-30), <br> entire document | 1-77 |
| A | WO 2018201958 A1 (SHARP KABUSHIKI KAISHA et al.) 08 November 2018 (2018-11-08) <br> entire document | 1-77 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 June 2023** | **13 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080017**

| Patent document cited in search report | | | Publication date (day/month/year) | Patent family member(s) | | | Publication date (day/month/year) |
|---|---|---|---|---|---|---|---|
| CN | 114071690 | A | 18 February 2022 | WO | 2022028465 | A1 | 10 February 2022 |
| WO | 2021062764 | A1 | 08 April 2021 | EP | 4027736 | A1 | 13 July 2022 |
| | | | | US | 2022225254 | A1 | 14 July 2022 |
| | | | | CN | 114287164 | A | 05 April 2022 |
| CN | 109089309 | A | 25 December 2018 | | None | | |
| WO | 2018201958 | A1 | 08 November 2018 | CN | 108811072 | A | 13 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210216683

- CN 202210454137